# EUROPÄISCHE PATENTSCHRIFT

(11) **EP 4 279 552 B1**
(45) Veröffentlichungstag und Bekanntmachung des Hinweises auf die Patenterteilung: **24.06.2026**
(21) Anmeldenummer: 23195931.3
(22) Anmeldetag: 26.05.2021
(51) Int. Cl.: A01N 59/16, A01N 59/00, A01N 25/08, A01N 25/26, A01P 1/00, C09D 5/14, C09D 7/62

(54) **PARTIKULÄRES ANTIMIKROBIELLES HYBRIDSYSTEM**
PARTICULATE ANTIMICROBIAL HYBRID SYSTEM
SYSTÈME HYBRIDE ANTIMICROBIEN PARTICULAIRE

(30) Priorität: 26.05.2020 EP 20176476; 05.08.2020 EP 20189686; 11.09.2020 EP 20195711
(43) Veröffentlichungstag der Anmeldung: 22.11.2023
(62) Teilanmeldung aus: 21729286.1
(73) Patentinhaber: AGXX Intellectual Property Holding GmbH, 14169 Berlin (DE)
(72) Erfinder: LANDAU, Uwe, 14169 Berlin (DE); WAGNER, Olaf, 12163 Berlin (DE); MEYER, Carsten, 10589 Berlin (DE)
(74) Vertreter: Remus, Alvaro Johannes

(56) Entgegenhaltungen:
- EP-A1- 2 716 605
- EP-A1- 2 949 325
- DE-A1- 102006 049 108
- DE-A1- 102012 218 233
- UWE LANDAU: "AGXX - Eine nachhaltige Lösung für die Entkeimung wässriger Lösungen", GALVANOTECHNIK, 1 November 2013 (2013-11-01), Germany, pages 2169 - 2184, XP055738114, Retrieved from the Internet <URL:https://www.edelhoff-wire.de/fileadmin/Infocenter/ae-aqua-galvanotechnik-11.2013.pdf> [retrieved on 20201008]
- EMANUEL CLAUSS-LENDZIAN ET AL: "Stress response of a clinical Enterococcus faecalis isolate subjected to a novel antimicrobial surface coating", MICROBIOLOGICAL RESEARCH, vol. 207, 1 March 2018 (2018-03-01), DE, pages 53 - 64, XP055738112, ISSN: 0944-5013, DOI: 10.1016/j.micres.2017.11.006
- A. GURIDI ET AL: "New antimicrobial contact catalyst killing antibiotic resistant clinical and waterborne pathogens", MATERIALS SCIENCE AND ENGINEERING C, vol. 50, 1 May 2015 (2015-05-01), CH, pages 1 - 11, XP055738110, ISSN: 0928-4931, DOI: 10.1016/j.msec.2015.01.080
- X WU ET AL: "Characterization of silica-supported Ru-Ag and Ru-Au bimetallic catalysts by hydrogen chemisorption and nmr of adsorbed hydrogen", JOURNAL OF CATALYSIS, 1 January 1990 (1990-01-01), Amsterdam, pages 43 - 59, XP055767644, Retrieved from the Internet <URL:https://doi.org/10.1016/0021-9517(90)90156-E> DOI: 10.1016/0021-9517(90)90156-E
- QIAOQIAO YIN ET AL: "Plasmonic molybdenum oxide nanosheets supported silver nanocubes for enhanced near-infrared antibacterial activity: Synergism of photothermal effect, silver release and photocatalytic reactions", APPLIED CATALYSIS B: ENVIRONMENTAL, vol. 224, 1 May 2018 (2018-05-01), AMSTERDAM, NL, pages 671 - 680, XP055737944, ISSN: 0926-3373, DOI: 10.1016/j.apcatb.2017.11.024
- ZHANG XUE-GANG ET AL: "Constructing magnetic and high-efficiency AgI/CuFe2O4 photocatalysts for inactivation of Escherichia coli and Staphylococcus aureus under visible light: Inactivation performance and mechanism analysis", SCIENCE OF THE TOTAL ENVIRONMENT, vol. 668, 6 March 2019 (2019-03-06), pages 730 - 742, XP085645567, ISSN: 0048-9697, DOI: 10.1016/J.SCITOTENV.2019.03.068
- ALEXANDER HEISS ET AL: "Enhanced antibacterial activity of silver-ruthenium coated hollow microparticles", BIOINTERPHASES, vol. 12, no. 5, 1 December 2017 (2017-12-01), US, pages 05G608, XP055767777, ISSN: 1934-8630, DOI: 10.1116/1.5003803

## Beschreibung

### Hintergrund der Erfindung

Die Erfindung betrifft ein Hybridmaterial, das insbesondere als Additiv in Verbindung mit Materialien, Werkstoffen und/oder Beschichtungsmaterialien zur Erzeugung einer antimikrobiellen, antiviralen und/oder fungiziden Wirkung vorgesehen ist, und das Partikel umfasst, die jeweils mindestens zwei unterschiedliche Metallverbindungen umfassen, wobei zumindest eine erste Metallverbindung und eine zweite Metallverbindung zumindest mit ihren jeweiligen Oberflächen miteinander in elektrisch leitendem Kontakt stehen, und wobei die erste Metallverbindung mindestens eine halbleitende Verbindung mindestens eines Übergangsmetallelements umfasst, das über mehrere Oxidationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen Halbelemente bilden, die in Gegenwart von Wasser und Sauerstoff kurzgeschlossen sind und dadurch eine antimikrobielle, antivirale und/oder fungizide Wirkung entfalten. Die Erfindung betrifft ferner die Verwendung eines solchen partikulären Hybridmaterials.

Additive müssen i.d.R. eine Reihe von Eigenschaften besitzen, die basierend auf einem Grundwerkstoff alleine häufig nicht erreicht werden können. Mittels Oberflächentechnik können gewünschte Eigenschaftsprofile eingestellt werden. Häufig werden dabei Eigenschaften benötigt, die nicht durch ein Material allein, sondern nur durch mehrere Oberflächenmaterialien, bestehend aus unterschiedlichen Komponenten, erreicht werden können. Solche Mehrkomponentensysteme werden auch als hybride Werkstoff- bzw. Materialsysteme bezeichnet.

Antimikrobiell ausgestattete Vorrichtungen bzw. Produkte werden in sensiblen Bereichen, z. B. in der Medizin- und Hygienetechnik oder Lebensmittelverarbeitung bereits seit längerem eingesetzt. Die aktuelle SARS-CoV-2 Pandemie, aber auch viele vorausgegangene Epidemien haben das Thema Hygiene und Schutz vor pathogenen Mikroorganismen ganz weit in das Bewusstsein der Bevölkerung gerückt und das antimikrobielle Schutzbedürfnis auf alle Lebensbereiche ausgeweitet. Die aktuelle Situation macht aufgrund der gewaltigen negativen Auswirkungen auf die Weltwirtschaft deutlich, welche Bedeutung antimikrobieller Schutz besitzt und dass der Bedarf an hochwirksamen antimikrobiellen Schutzmaterialien erheblich steigen wird. Gerade für Gegenstände, die vielfach berührt werden oder als antimikrobielle Schutzausrüstungen, wie z.B. Mundschutzmasken, dienen, werden zunehmend leistungsfähigere und langlebigere antimikrobielle Systeme benötigt, die gut verarbeitet und in Produkte integriert werden können.

### Stand der Technik

Bisherige Lösungen im Bereich der antimikrobiell wirksamen Additive beschränken sich auf den Einsatz von herkömmlichen bioziden Substanzen, die durch Auslaugen freigesetzt werden. Hierbei werden oligodynamische Metalle wie Silber, Kupfer oder Zink, deren chemische Modifikationen, organische Substanzen wie Triclosan und Isothiazolinone sowie metallorganische Substanzen wie Zinkpyrithion eingesetzt. Diese Substanzen werden in einem Depot in die Trägermatrix eingelagert. Ist das Depot erschöpft, so ist die antimikrobielle Wirkung des Trägermaterials nicht mehr gegeben. Neue Entwicklungen auf dem Gebiet der antimikrobiell wirksamen Zusätze beziehen sich meist auf die Herstellung von Partikeln für die Pulverbeschichtung, auf eine verbesserte Dispergierung von Bioziden in einer polymeren Trägermatrix, auf die Vermeidung von Verfärbungen der Trägermatrix durch die beigemengten Biozide sowie auf die kontrollierte Freisetzung der bioziden Wirkstoffe durch Verkapselung. Von zukunftsfähigen antimikrobiellen Systemen wird aber erwartet, dass sie eine ausreichende spontane Wirkung entfalten, um das Wachstum von Mikroorganismen zu verhindern und gleichzeitig über lange Zeiträume hinweg durch langsames Freisetzen toxikologisch und ökotoxikologisch verträglicher Mengen der Wirksubstanz antimikrobiell wirksam sind.

Aus der WO 2008/046513 A2 ist eine bioaktive, Silber, Ruthenium und ein Vitamin enthaltende metallische Beschichtung bekannt, die zur Entkeimung, Desinfektion und Dekontamination von Wasser oder wässrigen Lösungen verwendet wird. Die Kombination von Silber mit Ruthenium und einem Vitamin, beispielsweise Ascorbinsäure, führt zu einer schnelleren und effizienteren Abtötung von Mikroorganismen. Gleichzeitig verhindern diese bioaktiven Metalloberflächen die Besiedelung mit Mikroorganismen und die Anheftung oder stabile Ablagerung von problematischen Biomolekülen wie zum Beispiel DNA, RNA oder Proteinen. Durch die Beschichtung entsteht eine sich selbst reinigende Oberfläche, die bei Kontakt mit Wasser oder wässrigen Lösungen sehr schnell und effizient dessen Keimfreiheit herstellt und über längere Zeiträume aufrechterhält.

Das Patent EP 0 677 989 B1 offenbart die Herstellung eines antimikrobiell wirksamen Pulvers, das als Zusatz für Produkte aus Kunststoff verwendet werden kann. Das Pulver besteht aus einem Kern aus anorganischem Material, das mit einem antimikrobiell wirksamen Metall oder einer solchen Metallverbindung beschichtet ist. Eine zweite Beschichtung besteht aus Aluminiumsilikat, Aluminiumoxid, Aluminiumphosphat, Kieselsäure, Silikat, Borosilikat oder aus Mischungen dieser Substanzen. Durch die Porosität der Beschichtung soll die Diffusion antimikrobiell wirksamer Substanzen reguliert werden, so dass eine mögliche Verfärbung der verwendeten Kunststoffe verhindert wird. Eine dritte Beschichtung aus wasserhaltigen Metalloxiden von Aluminium, Magnesium, Zirkonium oder der Seltenen Erden soll die Agglomeration der Partikel reduzieren und deren Dispergierung in den Kunststoffen verbessern. Der Gehalt der antimikrobiellen Beschichtung beträgt 0,05 bis 20 Gew.-% bezogen auf das Trägermaterial. Für die zweite Beschichtung liegt der Gehalt bei 0,5 bis 20 Gew.-%, ebenfalls bezogen auf das Trägermaterial. Das antimikrobiell wirksame Pulver kann einer Vielzahl an aliphatischen oder aromatischen Polymeren beigemengt werden.

Die EP 0 270 129 A2 offenbart ein Verfahren zur Herstellung eines antimikrobiell wirksamen Pulvers auf Basis von Zeolithen sowie dessen Verwendung als Additiv für Harze. Es werden dabei sowohl natürliche als auch synthetische Zeolithe verwendet. Die antimikrobielle Funktion beruht auf dem vollständigen Austausch mit Ammoniumionen sowie mit Ionen der Metalle Silber, Kupfer, Zink, Quecksilber, Zinn, Blei, Bismut, Cadmium, Chrom und Thallium. Der Metallgehalt beträgt für Silber 0,1 bis 15 Gew.-% und für Kupfer oder Zink 0,1 bis 8 Gew.-%. Das antimikrobiell wirksame Zeolith wird Harzen wie Polyethylen, Polypropylen, Polystyrol oder PVC beigemengt.

Das Patent US 5 147 686 offenbart die Herstellung antimikrobiell wirksamer Pulver unter Verwendung von pulverförmigem Titanoxid als Trägermaterial. Die Pulverpartikel besitzen eine Größe von 0,01 *µm* - 3 *µm.* Die Partikel werden mit einer antimikrobiell wirksamen Beschichtung versehen. Die Beschichtung besteht aus Kupfer, Zink sowie deren Legierungen wie Cu-Zn, Cu-Ag, Cu-Sn, Cu-Al, Zn-Sn, Zn-Sn-Cu, Zn-Al-Cu-Mg oder ähnlichen Legierungen. Der Metallgehalt beträgt 0,001 bis 35 Gew.-%. Die Beschichtung erfolgt durch außenstromlose Abscheidung, wobei die Oberfläche der Trägerpartikel zunächst mit Palladium oder Zinn aktiviert wird. Das Pulver zeichnet sich neben seinen antimikrobiellen Eigenschaften als Additiv in verschiedenen Medien aus.

Die US 2016/0369405 A1 offenbart ein Verfahren zur Herstellung von mit Metall beschichteten Partikeln in einer Flüssigkeit. Als Basispartikel dienen Partikel aus Silikon, Zinn, Germanium, Gallium, Blei, Zink, Aluminium oder Carbon, die in einem Reaktor mit einem Metall beschichtet werden, wobei es sich bei dem Metall um elementares Silber, Kupfer, Platin, Palladium, Eisen, Kobalt, Rhodium, Nickel, Vanadium, Ruthenium, Iridium oder Gold handelt. Zur Einleitung der Beschichtungsreaktion wird ein Reduktionsmittel, beispielsweise Ascorbinsäure, eingesetzt. Insbesondere wird die Herstellung und Verwendung von mit Silber beschichteten Silikonpartikeln beschrieben.

Auch Materialien, die in einer Partikelform in Produkte bzw. Materialien eingearbeitet werden, um die benötigten Produkteigenschaften sicherzustellen bzw. zu erhöhen, werden ebenfalls als hybride Systeme mit verschiedenen Oberflächenzusammensetzungen und -strukturen ausgestaltet, um sie in andere Werkstoffe zu integrieren, damit sie dort ihre spezifischen Partikeleigenschaften in der gesuchten Weise vermitteln. Mehrkomponentige hybride Partikelsysteme sind daher auf den gewünschten Werkstoff und die geforderten Materialeigenschaften gezielt durch die richtige Wahl des Partikelmaterials, der Partikelgröße und -struktur sowie zusätzlich aufgebrachter Schichtsysteme oder durch chemische Nachbehandlungen einer oder mehrerer Komponenten des hybriden Partikelsystems anzupassen. Das gilt auch für partikuläre Systeme mit antimikrobiellen Eigenschaften, die diese antimikrobiellen Eigenschaften in Produkte oder Materialien einbringen sollen. Allerdings besteht die Gefahr, dass bei der Partikel-Verarbeitung oder Partikel-Werkstoffintegration deren gewünschte Kerneigenschaft - die antimikrobielle Wirkung - geschwächt oder sogar verloren geht.

### Zusammenfassung der Erfindung

Es ist Aufgabe der Erfindung, ein antimikrobiell wirksames partikuläres Hybridmaterial zu entwickeln, dass seine antimikrobielle Eigenschaft auch nach der Verarbeitung, der Werkstoffintegration und/oder als Additiv in Produkten aufrechterhalten kann.

Erfindungsgemäß wird die Aufgabe durch ein Hybridmaterial der eingangs genannten Art gelöst, bei dem die Partikel jeweils mindestens ein Trägermaterial umfassen, auf das die beiden unterschiedlichen Metallverbindungen zumindest teilweise aufgebracht sind, wobei das Trägermaterial mindestens ein Material umfasst, das aus der Gruppe bestehend aus Glas, Zeolith, Silikat, Metall oder einer Metalllegierung, Metalloxid, Keramik, Graphit und einem Polymer ausgewählt ist, und wobei die Übergangsmetallverbindung der ersten Metallverbindung Ruthenium, das in einer oder beiden der Oxidationsstufen VI und IV vorliegt, umfasst. Insgesamt stellt die Erfindung damit ein hybrides, anpassungsfähiges partikuläres Mehrkomponentensystem aus unterschiedlichen Materialien zur Verfügung, das seine breitbandige antimikrobielle Wirksamkeit (die Wirksamkeit gegen Bakterien, Viren, Pilze und sonstige Mikroorganismen wird im Folgenden zur Vereinfachung als "antimikrobiell" bezeichnet) in die unterschiedlichsten Materialien, Werkstoffe und/oder Beschichtungsmaterialien transportieren kann, ohne dass die antimikrobielle Eigenschaft im Verarbeitungsprozess, der Werkstoffintegration oder dem gebrauchsfertigen Produkt verloren geht. Die Materialkomponenten, die für die Verarbeitungsprozesse bzw. die Materialintegration und die Nutzung des fertigen antimikrobiellen Produktes gebraucht werden, insbesondere das Trägermaterial, sind so ausgewählt, dass sie die antimikrobielle Eigenschaft des hybriden, partikulären Systems nicht negativ beeinflussen, sondern eher noch stärken. Das erfindungsgemäße Hybridmaterial ist darüber hinaus ein antimikrobiell wirkendes Partikelsystem, das, einstellbar über den hybriden Partikelaufbau, für die Verwendung mit unterschiedlichen Produkten oder Vormaterialien bzw. Werkstoffen und/oder Beschichtungsmaterialien geeignet ist. Dabei kann das erfindungsgemäße Hybridmaterial beispielsweise in den Werkstoff und/oder das Beschichtungsmaterial integriert sein. Durch die Kombination mit dem hybriden Partikelsystem wird dem Produkt oder Vormaterial eine antimikrobielle Eigenschaft vermittelt, wobei das Trägermaterial mindestens ein Material umfasst, das derart ausgewählt, ausgestaltet und/oder modifiziert ist, dass das erfindungsgemäße Hybridmaterial optimal an den Werkstoff und/oder das Beschichtungsmaterial und dessen Verwendung angepasst ist. Neben der Aufrechterhaltung der antimikrobiellen Wirkung liegt also ein weiterer Vorteil des erfindungsgemäßen Hybridmaterials darin, dass es beispielsweise durch die richtige Wahl des Partikelmaterials, der Partikelgröße und -struktur sowie zusätzlich aufgebrachte Schichtsysteme oder durch chemische Nachbehandlungen einer oder mehrerer Komponenten des hybriden Partikelsystems gezielt an das Material, den Werkstoff und/oder das Beschichtungsmaterial und die geforderten Materialeigenschaften sowie die gewünschten Anwendungen derselben anpassbar ist.

Erfindungsgemäß ist vorgesehen, dass das Trägermaterial mindestens ein Material umfasst, das aus der Gruppe bestehend aus Glas, Zeolith, Silikat, Metall oder einer Metalllegierung, Metalloxid (z.B. TiO₂), Keramik, Graphit und einem Polymer ausgewählt ist. Das erfindungsgemäße Hybridmaterial kann durch die Wahl des Trägermaterials hinsichtlich der Integrationsanforderungen in andere Materialien sowie der spezifischen Gebrauchsanwendungen gezielt eingestellt werden. Beispielsweise in Bezug auf Temperaturbelastbarkeit bei Integration in z. B. Kunststoffe (z. B. Silber-Partikel als Carrier), Wasseraufnahme/ Saugfähigkeit, magnetische Partikel, z. B. für analytische oder Produktions-Anwendungen in Apparaturen, aus denen die Partikelentfernung nur von außerhalb mit einem Magneten möglich ist (Eisenpartikel als Carrier) oder Farbgestaltung.

Erfindungsgemäß ist ferner vorgesehen, dass die Übergangsmetallverbindung der ersten Metallverbindung Ruthenium, das in einer oder beiden der Oxidationsstufen VI und IV vorliegt, umfasst. Ruthenium ist ein Edelmetall, das mehrere Oxidationszustände besitzt und aufgrund seiner unterschiedlichen Wertigkeiten in der Lage ist, beispielsweise unterschiedliche Ruthenium-Oxide zu bilden. Oberflächen-Redox-Übergänge wie Ru(VIII)/Ru(VI), Ru(VI)/Ru(IV), Ru(IV)/Ru(III) und möglicherweise Ru(III)/Ru(II) sind die Ursache für die hohe katalytische Aktivität der Ruthenium-Mischverbindungen und deren guten elektrischen Leitfähigkeiten. Die ungewöhnlich ausgeprägten katalytischen und elektrokatalytischen Eigenschaften der Rutheniumverbindungen hängen dabei von der Variation der Oxidationsstufen ab. Die antimikrobielle Wirkung ist beispielsweise besonders hoch bei erfindungsgemäßen Zusammensetzungen, die im ersten Halbelement Ruthenium(VI)-Oxid umfassen.

Auf dem Trägermaterial sind erfindungsgemäß zwei Metallverbindungen abgeschieden, die über eine hohe chemische Stabilität verfügen und unterschiedliche elektrochemische Potentiale besitzen. Die erfindungsgemäße Metallverbindungskombination ist so auf dem Trägermaterial aufgebracht, dass beide Metallverbindungen miteinander in elektrisch leitendem Kontakt stehen und in Form einer Vielzahl von über die wässrige Phase kurzgeschlossenen nano- bzw. mikrogalvanischen Elementen auf der Trägeroberfläche verteilt sind. Die vorliegende Erfindung umfasst somit in vorteilhafter Weise eine antimikrobiell wirksame Metallbeschichtung, die jeweils aus einer halbleitenden, katalytisch aktiven Übergangsmetallverbindung (Halbelement I eines galvanischen Elementes) und einer halbleitenden, schwer löslichen Silberverbindung (z. B. Silberoxid, Silberhydroxid, Silbersulfid, Silber-Halogen-Verbindungen oder Kombinationen daraus; Halbelement II des galvanischen Elementes) besteht, wobei beide miteinander in direktem, elektrisch leitenden Kontakt stehen. Das Übergangsmetallelement des ersten Halbelements ist dabei so ausgewählt, dass es über mehrere Oxidationsstufen verfügt und damit über katalytisch aktive Zentren einen (relativ leichten) Wechsel der Oxidationsstufen erlaubt. Besonders geeignete Halbelemente sind also solche, die mehrere Wertigkeiten aufweisen und an denen über einen großen Potentialbereich hoch reversible Redox-Reaktionen ablaufen können. Die hohe katalytische Aktivität solcher Halbelemente für die Sauerstoffreduktion ist dabei auf den leichten Wechsel der Oxidationsstufen sowie den leichten Sauerstoffaustausch zurückzuführen, die an den aktiven Zentren der Halbleiteroberfläche bevorzugt stattfinden. Dabei wird das Übergangsmetallelement nur in seiner Wertigkeit verändert, wodurch die eigentliche Redox-Reaktion entsteht. Deshalb wird keine Übergangsmetallverbindung verbraucht oder gebildet, sondern nur die Oxidationsstufen verändert. Die Übergangsmetallverbindung bindet den molekularen Sauerstoff, wodurch dieser katalytisch reduziert werden kann. Deshalb ist das Vorhandensein von mehreren Wertigkeiten Voraussetzung für die katalytische Wirkung und die Redox-Reaktion. Es muss also keine Übergangsmetallverbindung gebildet werden. Spezielle Metalloxide bzw. Metallsulfide und schwer lösliche Silberverbindungen weisen katalytische Eigenschaften, eine elektrische Leitfähigkeit und eine hohe Stabilität in Wasser auf. Durch geeignete Materialkombination sind zwei Metallverbindungen miteinander im elektrischen Kontakt, die ein unterschiedliches elektrochemisches Potential besitzen und somit eine galvanische Zelle bilden. Wird diese Zelle über die wässrige Phase kurzgeschlossen, entsteht aufgrund der geringen Distanz (nm- oder µm-Bereich) zwischen den beiden sich kontaktierenden Metallen eine hohe elektrische Feldstärke. Diese trägt signifikant zur Keimabtötung bei. An beiden Elektroden des mikrogalvanischen Elementes laufen dabei Redox-Reaktionen ab, die jede für sich zu einer Abtötung der Mikroorganismen führen. Am ersten Halbelement (Kathode) wird molekularer Sauerstoff zu Sauerstoffradikalen reduziert, die dann toxisch auf die Mikroorganismen wirken. Am zweiten Halbelement (Anode) werden Elektronen von den Mikroorganismen an den Silberhalbleiter abgegeben und diese dadurch oxidativ zerstört.

Die elektrochemische Potentialdifferenz der auf dem Trägermaterial abgeschiedenen Übergangsmetallverbindungen des hybriden Systems ist dabei so eingestellt, dass durch Redox-Prozesse der in der feuchten Umgebung befindliche Sauerstoff reduziert und antimikrobiell aktive Sauerstoffradikale gebildet werden können. Das erfindungsgemäße hybride antimikrobielle Partikelsystem, dessen antimikrobielle Wirksamkeit nicht auf der Abgabe von Bioziden oder Metallionen, sondern auf der katalytisch unterstützten Erzeugung von Sauerstoffradikalen beruht, vorzugsweise an einer Edelmetallkombination von Silberoxid/Rutheniumoxid und/oder Silberchlorid/Rutheniumoxid, verändert seine Zusammensetzung auch bei langzeitiger antimikrobieller Anwendung nicht und benötigt im Gegensatz zu Bioziden oder oligodynamischen Metallen kein Depot oder die Biozid- bzw. Metallionenabgabe regulierende Vorrichtungen.

Die beiden Metallverbindungen (Halbelemente) können beispielsweise als Schichtsystem auf der Oberfläche des partikulären Trägers (Trägermaterial) aufgebracht sein, wobei die Schicht der einen Metallverbindung zumindest teilweise über der der anderen Metallverbindung liegt. Dabei kann die jeweils obere Schicht porös (insbesondere nanoporös) bzw. mikrorissig, insbesondere clusterförmig, auf das andere Metall aufgetragen bzw. auf diesem abgeschieden sein, so dass die wässrige Lösung bzw. die Feuchtigkeit Zugang zu beiden Halbelementen hat und das galvanische Element kurzgeschlossen wird. Alternativ oder zusätzlich können die beiden Metallverbindungen (Halbelemente) aber beispielsweise auch in Form einzelner Partikel auf der Oberfläche des partikulären Trägers (Trägermaterial) aufgebracht sein. Dabei kann es sich beispielsweise um Bimetallpartikel, die beide Metallverbindungen umfassen, und/oder Metallpartikel, die jeweils nur eine der beiden Metallverbindungen umfassen, handeln. Letztere können sequenziell, d.h. erst Partikel des ersten Metalls und dann Partikel des zweiten Metalls (oder umgekehrt), oder gleichzeitig als Gemisch von Partikeln beider Metalle so auf das Trägermaterial aufgebracht werden, dass sie in elektrisch leitendem Kontakt stehen. Die Partikel können einschichtig (nebeneinander liegend) und/oder zumindest teilweise mehrschichtig (übereinander liegend) auf dem Trägermaterial aufgebracht sein.

Anders als bei den Bioziden und oligodynamischen Metallen, die für ihre Wirksamkeit toxische Stoffe in die Umwelt abgeben müssen, entsteht bei der Verwendung des erfindungsgemäßen Hybridmaterials aus den gebildeten Sauerstoffradikalen am Ende nur Wasser. Da es sich bei der Metallkombination um ein katalytisch unterstütztes System handelt, ist deren antimikrobielle Wirkung in vorteilhafter Weise ausschließlich von der aktiven Oberfläche und nicht wie bei Bioziden oder den oligodynamischen Systemen (Silber, Kupfer und Zink bzw. deren Salze oder Verbindungen) von deren Menge und Auslaugungsgeschwindigkeit abhängig.

In weiterer vorteilhafter Ausgestaltung der Erfindung ist vorgesehen, dass das Hybridmaterial mit organischen Polymeren, vorzugsweise Polyethylenglycol (PEG), Polydopamin und/oder Chitosan, und/oder mit Ascorbinsäure oder Ascorbinsäurederivaten modifiziert ist. Dabei kann die Modifikation durch eine Vorbehandlung des Trägermaterials vor dem Aufbringen der Metallverbindungen, beispielsweise zur Erleichterung der Beschichtung, und/oder eine Nachbehandlung des Hybridmaterials nach dem Aufbringen der Metallverbindungen erfolgen. Auf diese Weise können bestimmte Eigenschaften des mit dem erfindungsgemäßen Hybridmaterial dotierten Produkts (Werkstoff und/oder Beschichtungsmaterial) verändert bzw. verbessert werden. So kann beispielsweise die Rieselfähigkeit und/oder Dispergierbarkeit von Partikeln bzw. Pulver durch eine Nachbehandlung des Hybridmaterials mit z.B. Polydopamin oder Propylenglykol (PG) gezielt eingestellt werden.

In vorteilhafter Ausgestaltung der Erfindung ist ferner vorgesehen, dass die Stärke der antimikrobiellen Wirkung durch ein Einstellen der Menge mindestens einer der beiden Metallverbindungen und/oder der Flächenanteile der beiden Metallverbindungen auf der Partikeloberfläche gezielt einstellbar ist. Die antimikrobielle Stärke des gewählten antimikrobiellen Hybridmaterials ist also nicht allein durch Veränderung der Partikelmenge, sondern auch durch Variieren seines Aufbaus einstellbar. Das erfindungsgemäße hybride System kann gezielt hinsichtlich der Stärke seiner antimikrobiellen Wirkung (häufig wird nicht die höchste Wirkung gewünscht, Einstellung per Wachstumskurven) und den Anforderungen an die Verwendung bzw. Integration in andere(n) Materialien sowie für die spezifischen Gebrauchsanwendungen eingestellt werden. Beispielsweise kann durch die Variation des Beschichtungsverfahrens die Dicke mindestens einer Metallschicht eingestellt werden. Durch die Form des Trägermaterials und/oder das Reduktionsverfahren bei der Beschichtung kann beispielsweise die Struktur der Metallschichten gezielt beeinflusst werden. Die Stärke der antimikrobiellen Wirkung des erfindungsgemäßen Hybridmaterials kann ferner beispielsweise durch den Einsatz einer definierten Menge mindestens einer Metallverbindung (z.B. Anteil der Metallverbindung am gesamten Hybridmaterial in Gew.-%) gezielt eingestellt werden.

Die Übergangsmetallverbindung der ersten Metallverbindung kann mindestens ein entsprechendes Metalloxid, Metalloxyhydrat, Metallhydroxid, Metalloxyhydroxid, Metallhalogenid und/oder mindestens ein Metallsulfid des Übergangsmetallelements umfassen.

In vorteilhafter Ausgestaltung der Erfindung ist ferner vorgesehen, dass der Silberhalbleiter mindestens ein Silberoxid, Silberhydroxid, Silberhalogenid oder Silbersulfid, oder eine Kombination von Silber und einer entsprechenden Silberverbindung (beispielsweise metallisches Silber, das an seiner Oberfläche eine Silberverbindung wie z.B. Silberoxid oder Silberchlorid aufweist), umfasst.

In weiterer vorteilhafter Ausgestaltung der Erfindung ist vorgesehen, dass die Partikel sphärisch oder polyedrisch ausgebildet sind und einen mittleren Durchmesser von höchstens 100 µm, vorzugsweise höchstens 50 µm, insbesondere höchstens 5 µm, aufweisen. Beispielsweise können solche kugelförmigen Partikel einen mittleren Durchmesser zwischen 0,1 und 70 µm, vorzugsweise zwischen 0,1 und 50 µm oder 0,1 und 10 µm, insbesondere zwischen 1 und 5 µm, aufweisen. Alternativ oder zusätzlich können die Partikel faserförmig ausgebildet sein und eine mittlere Länge von höchstens 1 mm, vorzugsweise höchstens 100 µm, insbesondere höchstens 75 µm oder höchstens 60 µm, aufweisen. Beispielsweise können solche länglichen Partikel eine mittlere Länge zwischen 0,1 und 100 µm, vorzugsweise zwischen 0,1 und 50 µm oder 0,1 und 10 µm, insbesondere zwischen 0,1 und 1 µm, aufweisen. Partikelgröße und Form spielen beispielsweise bei Düsenproblemen beim Spinnen von Polymerfäden (z. B. feine Silberpartikel) oder bei geforderter großer Oberfläche (z. B. durch unterschiedliche Cellulosefaser-Querschnitte oder feine Silberpartikel) eine bedeutende Rolle. Da die antimikrobielle Wirkung des erfindungsgemäßen Hybridmaterials auf einem katalytischen Prozess an der Partikeloberfläche beruht, nimmt die Partikeleffizienz bei im Verhältnis zum Partikelvolumen steigendem Oberflächenanteil der Partikel zu. Daher ist die Effizienz der Partikel für kleinere Partikelgrößen besonders vorteilhaft.

In einer besonderen Ausführungsform wird das antimikrobielle Hybridsystem mit einem magnetisierbaren Partikelkern ausgestattet. Beispielsweise kann die antimikrobielle Beschichtung auf einem ferromagnetischen Kern (z. B. Nickel-, Eisen-, Cobalt-Pulver) abgeschieden werden. Solche antimikrobiellen Hybridsysteme werden z. B. dort benötigt, wo nach Gebrauch der Partikel deren vollständige Entfernung aus schwer zugänglichen Reaktions- oder Analysengefäßen erfolgen muss. Die antimikrobiellen, magnetisierbaren Partikelhybride können von außerhalb des Reaktors mit einem starken Magneten an eine zugängliche Stelle eines Reaktors gezogen werden, wo sie entnommen werden können.

Vorzugsweise wird eine zweite Metallverbindung auf das Trägermaterial aufgebracht, welche mindestens einen elektrisch leitfähigen Silberhalbleiter umfasst. Eine erste Metallverbindung wird ebenfalls auf das Trägermaterial und/oder die zweite Metallverbindung aufgebracht, wobei die zweite Metallverbindung Ruthenium umfasst, das in einer oder beiden der Oxidationsstufen VI und IV vorliegt. Alternativ kann eine erste Metallverbindung auf das Trägermaterial aufgebracht werden, welche Rurhenium umfasst, das in einer oder beiden der Oxidationsstufen VI und IV vorliegt. In diesem Fall wird eine zweite Metallverbindung ebenfalls auf das Trägermaterial und/oder die erste Metallverbindung aufgebracht, wobei die zweite Metallverbindung mindestens einen elektrisch leitfähigen Silberhalbleiter umfasst. Bei beiden Alternativen wird eine Metallverbindung derart durchlässig auf das Trägermaterial und/oder die andere Metallverbindung aufgebracht, dass die beiden Metallverbindungen zumindest mit ihren jeweiligen Oberflächen miteinander in elektrisch leitendem Kontakt und jeweils in Kontakt mit einem Elektrolyten stehen und dadurch eine antimikrobielle Wirkung entfalten können (siehe oben).

Zur Herstellung eines erfindungsgemäßen Hybridmaterials kann beispielsweise Silber chemisch-reduktiv auf dem Trägermaterial (z.B. Glaskugeln) abgeschieden werden. Als Silbersalz wird vorzugsweise Silbernitrat (AgNO₃) verwendet. Als Reduktionsmittel können verschiedene Reduktionsmittel eingesetzt werden, beispielsweise Aldehyde, Ascorbinsäure, Metallhydride (vorzugsweise Natriumborhydrid), Hydrazin und/oder ein Hydraziniumsalz, und/oder Hydroxylamin und/oder ein Hydroxylammoniumsalz. Im Fall von Cellulose als Trägermaterial wird vorzugsweise Ascorbinsäure als Reduktor eingesetzt. Dieser erste Schritt kann für den Fall, dass kommerziell verfügbare silberbeschichtete Trägermaterialien (z.B. vorversilberter Glaskugeln) verfügbar sind und verwendet werden, auch entfallen. Auf die Silberschicht kann dann Ruthenium ebenfalls chemisch-reduktiv aufgebracht werden. Für die Ruthenium-Beschichtung wird das silberbeschichtete Trägermaterial (z.B. Glaskugeln) in alkalischer Lösung unter starkem Rühren dispergiert. Dann werden Lösungen von Ruthenium(III)chlorid und Natriumborhydrid als Reduktionsmittel zugeführt.

In vorteilhafter Ausgestaltung des Verfahrens ist vorgesehen, dass zumindest eine der beiden Metallverbindungen clusterförmig, nanoporös, mikrorissig und/oder in Form einzelner Partikel auf das Trägermaterial und/oder die jeweils andere Metallverbindung aufgebracht wird.

In vorteilhafter Ausgestaltung des Verfahrens ist ferner vorgesehen, dass das Trägermaterial und/oder die Metallverbindungen nach Schritt a) und/oder Schritt c) mit organischen Polymeren, vorzugsweise Polyethylenglycol, Polydopamin und/oder Chitosan, und/oder mit Ascorbinsäure oder Ascorbinsäurederivaten modifiziert wird/werden. Folglich kann das Hybridmaterial durch eine Vorbehandlung des Trägermaterials vor dem Aufbringen der Metallverbindungen, beispielsweise zur Erleichterung der Beschichtung, und/oder eine Nachbehandlung nach dem Aufbringen der Metallverbindungen modifiziert werden. Auf diese Weise können bestimmte Eigenschaften des mit dem erfindungsgemäßen Hybridmaterial dotierten Produkts (Werkstoff und/oder Beschichtungsmaterial) verändert bzw. verbessert werden. Beispielsweise kann das Trägermaterial mit der antimikrobiellen Metallbeschichtung, ohne oder mit einer chemischen erzeugten Verbindungsschicht (siehe unten), modifiziert werden, um die Eigenschaften des Hybridmaterials zu optimieren. Dies betrifft z.B. die Rieselfähigkeit, Dispergierbarkeit oder die Langzeitstabilität. Erfindungsgemäß bleiben dabei trotz der Modifizierung des hybriden Partikelsystems deren antimikrobielle Eigenschaften erhalten oder werden sogar verbessert.

In weiterer vorteilhafter Ausgestaltung des Verfahrens ist vorgesehen, dass auf mindestens einer Metallverbindung eine Verbindungsschicht erzeugt wird, die mindestens eine Metallverbindung des entsprechenden Metalls umfasst, welche aus der Gruppe bestehend aus Halogeniden, Oxiden und Sulfiden ausgewählt ist. Zur Steigerung der Funktion werden die beiden Metallverbindungeen dabei mit einer chemisch stabilen Verbindung der Metalle aktiviert. Zu diesem Zweck wird auf den Metallverbindungen eine Verbindungsschicht erzeugt, die beispielsweise aus einem Halogenid, Oxid oder Sulfid bestehen kann. Der Einfluss der Nachbehandlung der partikulären Oberflächen kann beispielsweise anhand geeigneter mikrobiologischer Methoden bzw. Messverfahren, wie z.B. durch Wachstumskurven, ermittelt bzw. entsprechend eingestellt werden.

In vorteilhafter Ausgestaltung des Verfahrens ist ferner vorgesehen, dass die Stärke der antimikrobiellen Wirkung durch ein Einstellen der Menge mindestens einer der beiden Metallverbindungen und/oder der Flächenanteile der beiden Metallverbindungen auf der Partikeloberfläche gezielt eingestellt wird. Beispielsweise kann die Stärke der antimikrobiellen Wirkung des hybriden Partikelsystems durch entsprechende Wahl der Abscheidungsbedingungen für die beiden Metallverbindungen auf der Oberfläche des Trägermaterials gesteuert werden, wobei die Flächenanteile der beiden Metallverbindungen auf der Hybridoberfläche gegeneinander verändert werden. Die für gewünschte antimikrobielle Wirkung des erfindungsgemäßen partikulären Hybridmaterials gesuchte Oberflächenzusammensetzung lässt sich anhand geeigneter mikrobiologischer Methoden, wie beispielsweise durch Wachstumskurven, anhand der Variation der Partikelzusammensetzung und -aufbau ermitteln.

In weiterer vorteilhafter Ausgestaltung des Verfahrens ist vorgesehen, dass die jeweiligen Metallverbindungen sequenziell oder gleichzeitig mittels elektrochemischer Abscheidung, chemisch-reduktiver Abscheidung, elektrophoretischer Beschichtung, Calcinieren, PVD-, CVD- und/oder Sol-Gel-Verfahren aufgebracht wird. Die beiden Metallverbindungen (Halbelemente) können dabei beispielsweise auch in Form einzelner Partikel auf der Oberfläche des Trägermaterials aufgebracht werden. Die Partikel können z.B. sequenziell, d.h. erst Partikel der ersten Metallverbindung und dann Partikel der zweiten Metallverbindung (oder umgekehrt), oder gleichzeitig als Gemisch von Partikeln beider Metallverbindungen (oder ggf. in Form von Bimetallpartikeln) auf das Trägermaterial aufgebracht werden.

Bei der Calcinierung werden thermisch leicht zersetzbare Verbindungen, die die gewünschten Übergangsmetalle (meist wasserfrei) enthalten, z.B. in Alkoholen (z.B. Ethanol oder Isopropanol), intensiv gemischt, auf die zu beschichtende Oberfläche aufgetragen und anschließend bei hohen Temperaturen (z.B. 200-500 °C) bei Luftanwesenheit thermisch zersetzt. Dabei kann durch Mischung der beiden Metallsalze jede gewünschte Zusammensetzung der beiden Halbelement-Metallverbindungen eingestellt werden, um die entsprechenden oxidischen Verbindungen zu erzielen. Zu den leicht zersetzbaren Rutheniumverbindungen gehört beispielsweise das RuCl₃ (Halogenide allgemein).

Es ist ferner vorgesehen, dass das Aufbringen der zweiten Metallverbindung auf das Trägermaterial und/oder die erste Metallverbindung mindestens einen Schritt mit starker oxidativer Wirkung umfasst. Beispielsweise können Ruthenium/Ruthenium-Oxide in einem zweistufigen Verfahren abgeschieden werden, wobei im ersten Schritt zunächst eine Aufoxidation von Ruthenium erfolgt und erst im zweiten Schritt die Reduktion des aufoxidierten Rutheniums zu Ruthenium und RuOx durchgeführt wird. Anders als bei der direkten, einstufigen Reduktion der Ru(III)-Ionen durch ein starkes Reduktionsmittel, beruht dieses indirekte, zweistufige Verfahren auf der Oxidation von Ru(III)-Ionen zu Ruthenium(VIII)-oxid (RuO₄). RuO₄ ist ein starkes Oxidationsmittel, das durch geeignete Reduktionsmittel in Ruthenium(IV)-Oxid überführt wird, wobei das Substrat mit einer Schicht an Ruthenium(IV)-Oxid überzogen wird. Beispielsweise kann die Bildung von Ruthenium(VI)-Oxid sowohl bei einer elektrochemischen wie bei einer PVD Abscheidung von Ruthenium erzielt werden, wenn die Ruthenium-Abscheidung einen Prozessschritt mit starker oxidativer Wirkung umfasst.

Es ist vorgesehen, dass nach dem Aufbringen der beiden Metallverbindungen eine thermische Nachbehandlung zur Einstellung spezifischer Oxidationsstufen durchgeführt wird. Die abgeschiedenen oxidischen Metall-Beschichtungen bzw. Metallverbindungen können, ein thermisch beständiges Trägermaterial vorausgesetzt, zur Einstellung spezifischer Oxidationsstufen einer thermischen Oxidation bzw. Reduktion in geeigneter Atmosphäre unterzogen werden.

Die Erfindung betrifft auch die Verwendung des erfindungsgemäßen Hybridmaterials zur gemeinsamen Anwendung mit beliebigen Materialen, Werkstoffen und/oder Beschichtungsmaterialien, vorzugsweise Lacken, Farben, Putzen, Polymeren und/oder Cellulose. Dabei kann das Hybridmaterial auf beliebige Art und Weise mit den Materialien, Werkstoffen und/oder Beschichtungsmaterialien assoziiert sein. Beispielsweise können die Materialien, Werkstoffe und/oder Beschichtungsmaterialien mit den Hybridmaterial-Partikeln beschichtet oder mit diesen vermengt sein. Vorzugsweise sind die Partikel des erfindungsgemäßen Hybridmaterials in die Materialien, Werkstoffe und/oder Beschichtungsmaterialien integriert.

Vorgesehen ist auch ein Verfahren zur Herstellung von Mikropartikeln, insbesondere Bimetallpartikeln, mit antimikrobieller Wirkung, welches die folgenden Schritte umfasst:
a) Dispergieren von Silberpartikeln, die einen mittleren Durchmesser von höchstens 50 µm aufweisen, in einer alkalischen Lösung,
b) Zugeben einer Ruthenium(III)chlorid-Lösung und eines Reduktionsmittels in die Dispersion gemäß Schritt a), und
c) Abtrennen der Mikropartikel aus der Dispersion gemäß Schritt b).

In vorteilhafter Ausgestaltung dieses Verfahrens ist vorgesehen, dass das Reduktionsmittel Natriumborhydrid, Hydrazin und/oder ein Hydraziniumsalz, und/oder Hydroxylamin und/oder ein Hydroxylammoniumsalz ist.

Die Erfindung umfasst ferner auch Mikropartikel, insbesondere Bimetallpartikel, zur Bildung eines antimikrobiell wirkenden Pulvers, die mittels des oben beschriebenen Verfahrens hergestellt wurden.

Vorzugsweise sind diese Mikropartikel bzw. Bimetallpartikel Bestandteil des erfindungsgemäßen Hybridmaterials, wobei das Trägermaterial zumindest teilweise mit den Mikropartikeln bzw. Bimetallpartikeln beschichtet ist.

Die Mikropartikel bzw. Bimetallpartikel können also in vorteilhafter Weise zur Herstellung eines erfindungsgemäßen Hybridmaterials verwendet werden, indem sie auf das Trägermaterial aufgebracht werden. Die Mikropartikel können dabei einschichtig (nebeneinander liegend) und/oder zumindest teilweise mehrschichtig (übereinander liegend) auf das Trägermaterial aufgebracht werden.

Die erfindungsgemäßen partikulären Materialien eignen sich z. B. dazu, Lacke und Farben, Putze, Polymere, Textilien und Verpackungsmaterialien mit antimikrobiellen Eigenschaften auszustatten. Als Trägermaterialien steht prinzipiell ein großes Spektrum an Materialien wie Metalle bzw. Metalloxide (z.B. TiO₂), keramisch/mineralische oder Polymer-Werkstoffe zur Verfügung. Vorteilhaft ist ein hybrides antimikrobiell wirkendes Partikelsystem besonders dann, wenn neben der Wirkkomponente, die weiteren Bestanteile des Hybridsystems zusätzliche positive Eigenschaften einbringen können, die die Wirkung, die Verarbeitung oder die Integration in das gewünschte Halbzeug oder das fertige Produkt unterstützen oder verbessern können.

"Partikel", "partikelförmig" oder "partikulär" im Sinne der Erfindung bezeichnet einzelne teilchenförmige Körper, die als Ganzes gegenüber anderen Partikeln und ihrer Umgebung abgegrenzt sind. Dabei sind im Rahmen der Erfindung alle möglichen Partikelformen und -größen, unabhängig von Geometrie und Masse, eingeschlossen. Eine Charakterisierung der Partikel kann beispielsweise über ihre Form, ihr Gewicht, ihr Volumen und/oder ihre Größe (z.B. Länge, Durchmesser, Umfang) erfolgen.

"Halbelement" im Sinne der Erfindung bezeichnet einen Teil eines galvanischen Elements, der dieses in Verbindung mit mindestens einem weiteren Halbelement bildet. Ein Halbelement umfasst dabei eine Metallelektrode, die sich zumindest teilweise in einem Elektrolyten befindet.

"Galvanisches Element" im Sinne der Erfindung bezeichnet die Kombination von zwei unterschiedlichen Metallen, die in einem gemeinsamen Elektrolyten jeweils eine Elektrode (Anode bzw. Kathode) bilden. Stehen die beiden Metallelektroden miteinander in direktem Kontakt oder sind sie über einen Elektronenleiter elektrisch leitend miteinander verbunden, gibt das unedlere Metall mit dem niedrigeren Redoxpotential (Elektronendonator, Anode) Elektronen an das edlere Metall mit dem höheren Redoxpotential (Elektronenakzeptor, Kathode) ab und setzt in Folge die Redoxprozesse an den Elektroden in Gang.

"Elektrolyt" im Sinne der Erfindung bezeichnet einen Stoff (z. B. Ionen in wässriger Lösung), der unter dem Einfluss eines elektrischen Feldes durch die gerichtete Bewegung von Ionen elektrischen Strom leitet.

"Werkstoff" im Sinne der Erfindung bezeichnet ein Material, aus dem ein Teil, Bauteil, Bauelement oder eine Baugruppe eines Gegenstands bzw. Produkts besteht. Insbesondere umfasst der Begriff "Werkstoff" u.a. Teile aus mindestens einem Polymer (Kunststoff; einschl. Folien als Verpackungsmaterial), Textilien (natürliche und/oder synthetische Textilfasern; gewebte, gewirkte, gestrickte und geflochtene Stoffe), Vliesstoffen, Metallen, Glas und Keramik.

"Beschichtungsmaterial" im Sinne der Erfindung bezeichnet ein Material oder einen Stoff, mit dem ein Gegenstand bzw. Produkt zumindest teilweise bedeckt ist bzw. werden kann. Das Beschichtungsmaterial kann dabei in einer oder mehreren (vorzugsweise dünnen) Schicht(en) auf den Gegenstand bzw. das Produkt aufgebracht sein bzw. werden. Insbesondere umfasst der Begriff "Beschichtungsmaterial" u.a. flüssige oder pastöse Beschichtungsstoffe wie z.B. Lacke, Farben und Putze, sowie feste Beschichtungsstoffe wie z.B. Pulver und Folien.

"Metall" im Sinne der Erfindung bezeichnet Atome eines chemischen Elements des Periodensystems der Elemente (alle Elemente, die keine Nichtmetalle sind), die mittels metallischer Bindungen ein Metallgitter und dadurch ein makroskopisch homogenes Material bilden, das sich u.a. durch eine hohe elektrische Leitfähigkeit und eine hohe Wärmeleitfähigkeit auszeichnet. Der Begriff "Metall" umfasst auch Legierungen, die mindestens zwei unterschiedliche Metalle umfassen, Metallverbindungen wie z.B. Metalloxide, Metalloxyhydrate, Metallhydroxide, Metalloxyhydroxide, Metallhalogenide und Metallsulfide, sowie Kombinationen von Metallen und entsprechenden Metallverbindungen.

"Schicht" oder "schichtförmig" im Sinne der Erfindung bezeichnet eine zwei- oder dreidimensionale Struktur, die eine horizontale Ausdehnung hat und zumindest durch zwei Flächen, die Schichtunterseite und die Schichtoberseite, begrenzt ist. Dabei kann eine Schicht aus einem zusammenhängenden Material bzw. Stoff und/oder sich zumindest teilweise berührenden Partikeln bestehen. Eine Schicht kann im Sinne der Erfindung homogen, heterogen, durchgehend (d.h. ununterbrochen), clusterförmig, nanoporös und/oder mikrorissig ausgebildet sein. "Beschichtet" im Sinne der Erfindung ist ein Material, Partikel oder sonstiger Körper, wenn zumindest ein Teil seiner (äußeren oder inneren) Oberfläche mit einer "Schicht" (siehe oben) versehen ist.

Die Erfindung wird im Weiteren anhand der folgenden Abbildungen und Beispiele exemplarisch näher erläutert.

### Kurze Beschreibung der Abbildungen

**Figur 1** zeigt eine schematische Abbildung einer beispielhaften Ausführungsform des erfindungsgemäßen Hybridmaterials.
**Figur 2** zeigt fotografische Abbildungen verschiedener antimikrobieller Varianten des erfindungsgemäßen Hybridmaterials, die auf versilberten Glasperlen S3000S der Firma Potters Industries Inc. mit einem mittleren Durchmesser von ca. 40 µm präpariert wurden.
**Figur 3** zeigt REM-Aufnahmen von versilberten Glaspartikeln S3000S der Firma Potters Industries Inc. in 300-facher Vergrößerung (oben links) und in 10.000-facher Vergrößerung (oben rechts). Mit Ruthenium beschichtete Proben sind in 10.000-facher Vergrößerung abgebildet: Proben 513 (Mitte links), 514 (Mitte rechts), 515 (unten links) und 516 (unten rechts).
**Figur 4** zeigt ein Balkendiagramm der katalytischen Bildung von Wasserstoffperoxid an der Oberfläche der partikulären antimikrobiellen Hybridmaterialien 513, 514 und 515 gemäß Figur 3.
**Figur 5** zeigt eine fotographische Abbildung eines Hemmhoftests. Es wurde eine Suspensionskultur von *E*. *coli*-Bakterien (DSM 498) auf eine Agarplatte ausplattiert. Als Proben wurden versilberten Glaspartikel S3000S sowie die antimikrobiellen Hybridmaterialien 513, 514 und 515 gemäß Figur 3 auf den Agar aufgebracht und für 18 *h* bei 37 °*C* inkubiert.
**Figur 6** zeigt Wachstumskurven von MRSA-Kulturen (Quelle: Robert-Koch-Institut) in Anwesenheit der Glaspartikel S3000S und der antimikrobiellen Hybridmaterialien 513, 514 und 515 gemäß Figur 3.
**Figur 7** zeigt fotografische Abbildungen beispielhafter Ausführungsformen des erfindungsgemäßen Hybridmaterials.
   a) Unbeschichtetes Cellulose-Pulver;
   b) beschichtetes, antimikrobielles Cellulose-Pulver mit einem Silbergehalt von 20 Gew.-% sowie einem Rutheniumgehalt von 1 Gew.-%;
   c) Verteilung der beiden Metalle auf der Cellulosefaser; und
   d) Hemmhoftest erfindungsgemäß hergestelltem Pulver.
**Figur 8** zeigt Wachstumskurven von MRSA-Kulturen (Quelle: Robert-Koch-Institut) in Anwesenheit des erfindungsgemäßen Hybridmaterials (Pulvers) gemäß Figur 7.
   a) Ermittlung der minimalen Hemm-Konzentration; und
   b) Abhängigkeit der antimikrobiellen Effizienz der Cellulose-Partikel vom Ruthenium-Gehalt.
**Figur 9** zeigt fotografische Abbildungen, ein Balkendiagramm und eine Tabelle zur antimikrobiellen Wirksamkeit einer mittels eines Lyocell-Prozesses hergestellten Cellulose-Folie bzw. eines entsprechenden Fadens.
   a) Cellulose-Folie;
   b) Hemmhoftest zur antimikrobiellen Wirksamkeit des erfindungsgemäß hergestellten Cellulose-Fadens gegen *E*. *coli* (DSM 498); und
   c) antimikrobielle Wirkung eines partikulären Cellulose-basierten Silber-Ruthenium-Hybrids (720b) gegen *S*. *aureus* (DSM 799).
**Figur 10** zeigt eine grafische Darstellung (Kurve) eines Virus-Plaque-Tests zur Wirksamkeit einer Ausführungsform des erfindungsgemäßen Hybridmaterials gegen SARS-CoV-2 und den Feline Coronavirus (FCoV).
   a) Feline Coronavirus (FCoV); und
   b) SARS-CoV-2.
**Figur 11** zeigt fotografische Abbildungen einer beispielhaften Ausführungsform des erfindungsgemäßen Hybridmaterials (Mikropartikel bzw. antimikrobielles Pulver).
   a) Unbeschichtetes Silberpulver;
   b) Erfindungsgemäß beschchtetes antimikrobielles Pulver;
   c) REM-Aufnahme eines Pulverpartikels in 100.000-facher Vergrößerung.
   d) Hemmhoftest zur antimikrobiellen Wirksamkeit der erfindungsgemäßen Mikropartikel bzw. des Pulvers.
**Figur 12** zeigt eine Wachstumskurve von MRSA für erfindungsgemäße Mikropartikel gemäß **Figur 11** **b.**
**Figur 13** zeigt fotographische Abbildungen einer weiteren beispielhaften Ausführungsform des erfindungsgemäßen Hybridmaterials (Mikropartikel bzw. antimikrobielles Pulver) auf katalytischer Basis.
   a) Pulver nach Abfiltrieren, Waschen und Trocknen;
   b) gemörsertes, schwarzes Pulver;
   c) REM-Aufnahme eines Pulverpartikels in 100.000-facher Vergrößerung; und
   d) Hemmhoftest zur antimikrobiellen Wirksamkeit der erfindungsgemäßen Mikropartikel bzw. des Pulvers.
**Figur 14** zeigt eine Wachstumskurve der Mikropartikel bzw. des Pulvers gemäß Figur 13.
**Figur 15** zeigt fotografische Abbildungen mehrerer Proben kommerzieller Fassadenfarbe, die mit steigenden Konzentrationen (0,1 Gew.-%, 0,5 Gew.-% und 1,0 Gew.-%) einer beispielhaften Ausführungsform des erfindungsgemäßen Hybridmaterials versetzt wurden, das auf Glaspartikeln präpariert wurde.
**Figur 16** zeigt fotografische Abbildungen mehrerer Proben eines kommerziellen Antifouling-Anstrichs, die mit steigenden Konzentrationen (2,0 Gew.-%, 4,0 Gew.-% und 8,0 Gew.-%) einer weiteren beispielhaften Ausführungsform des erfindungsgemäßen Hybridmaterials versetzt wurden, das auf Cellulose-Pulver präpariert wurde.
**Figur 17** zeigt fotografische Abbildungen von Proben aus Ultramid C33, die 1 Gew.-% einer beispielhaften Ausführungsform des erfindungsgemäßen Hybridmaterials enthalten, das mit kommerziellem Silberpulver präpariert wurde.
   a) Granulat;
   b) Platten;und
   c) Hemmhoftest der Proben gegen *E*. *Coli* Bakterien.
**Figur 18** zeigt eine fotografische Abbildung von Fasern aus Polyamid, die 3 Gew.-% einer beispielhaften Ausführungsform des erfindungsgemäßen Hybridmaterials auf katalytischer Basis enthalten (a) und ein Balkendiagramm zur antimikrobiellen Wirksamkeit dieser Fasern (b).
**Figur 19** zeigt fotografische Abbildungen eins erfindungsgemäß hergestellten antimikrobiellen Hybridmaterials, dessen Kern aus ferromagnetischem Eisenpulver besteht (a und b) sowie ein Balkendiagramm zur Lyse von gram-positiven *B*. *subtilis* Keimen durch dieses Hybridmaterial (c).
**Figur 20** zeigt fotografische Abbildungen einer beispielhaften Ausführungsform des erfindungsgemäßen Hybridmaterials, das durch starkes Rühren im Wasser gleichmäßig verteil ist.
   a) Partikel des Hybridmaterials ohne Nachbeschichtung; und
   b) Partikel des Hybridmaterials, die nachträglich mit einer Dopamin-Hydrochloridlösung (2 mg/ml) und einem Phosphatpuffer (0,1M, pH 8,5) bei RT behandelt wurden.
**Figur 21** zeigt eine fotografische Abbildung eines Hemmhoftests zur antimikrobiellen Wirksamkeit einer beispielhaften Ausführungsform des erfindungsgemäßen Hybridmaterials auf Cellulose-Basis, dessen Wirksamkeit durch eine Nachbehandlung nicht beeinträchtigt wird.
**Figur 22** zeigt fotografische Abbildungen eines Cellulose-basierten antimikrobiellen Hybridmaterials, das in Siloxane integriert wurde und diese mit antimikrobieller Wirksamkeit ausrüstet.
   a) Siloxan-Coatings H 2084 und H 5055; und
   b) antimikrobielle Untersuchungsergebnisse für *E*. *coli* auf einem Agar mit einseitig Siloxan-beschichteten Polypropylen-Plättchen.
**Figur 23** zeigt Wachstumskurven von MRSA-Bakterien bei Einsatz von zwei, nach unterschiedlichen Ruthenium-Abscheideverfahren hergestellten, Ruthenium/Ruthenium-Oxid//Silber/Silberchlorid (Ru/RuOx//Ag/AgCl) - Pulvern (AP 383 und AP 823) für verschiedene Pulvermengen.
**Figur 24** zeigt eine XPS-Oberflächenanalyse (Ru3d-Spektren) der galvanisch hergestellten Ru/RuOx//Ag/AgCl - Pulverproben 825 und 392 sowie der Ru/RuOx//Ag/AgOx-PVD - Beschichtungen auf Polyethylen-Folien (Proben Ru und RuOx).
**Figur 25** zeigt O1s-Spektren zu den Proben 825, 392, Ru, RuOx.

### Beschreibung beispielhafter und bevorzugter Ausführungsformen der Erfindung

Erfindungsgemäß wird das partikuläre Hybridmaterial auf der Basis eines Kernwerkstoffes (Trägermaterials) hergestellt, wobei beispielsweise zunächst eine erste geschlossene Schicht mit einem der beiden erfindungsgemäßen Elektrodenmetalle auf dem Kernwerkstoff (Cellulose, Metall, Glas, Keramik, Graphit, Polymer) aufgetragen wird. Im Anschluss daran wird das zweite Elektrodenmetall als nicht geschlossene, clusterförmige, poröse oder mikrorissige dünne zweite Schicht auf den Kernwerkstoff und/oder die erste Elektrodenschicht aufgetragen. Diese Beschichtungen können mit konventionellen elektrolytischen Prozessen, chemisch-reduktiv oder über Abscheidungen aus der Gasphase erfolgen. Vorzugsweise werden chemisch-reduktive Verfahren angewendet, bei denen die Metalle durch chemische Reduktion auf dem gewählten Trägermaterial aufgetragen werden. Geeignete Reduktionsmittel sind beispielsweise Aldehyde, Ascorbinsäure, Hydrazin, Hydroxylamin oder Metallhydride. Um zu verhindern, dass das Reduktionsmittel die Metallionen bereits in der Lösung und nicht auf den Partikelkernen abscheidet, was die Lösung zersetzen und zu einem Metallverlust führen würde, können dem Elektrolyten geeignete Inhibitoren zugesetzt werden, die erfahrenem galvanischen Personal bekannt sind. Bei der Ruthenium-Abscheidung kann als geeigneter Inhibitor beispielsweise Ethylendiamin zugesetzt werden. In Abhängigkeit vom verwendeten Reduktionsmittel muss die Substratoberfläche mit einem Katalysator aktiviert werden. Da Silber die Zersetzung von Natriumborhydrid bewirkt, ist für diese Kombination keine zusätzliche Aktivierung notwendig.

Die Abscheidung der beiden Metalle auf dem Trägermaterial kann beispielsweise in einem zweistufigen Prozess durchgeführt werden, da beide Metalle i. d. R. galvanisch aus unterschiedlich zusammengesetzten Elektrolyten abgeschieden werden können. Vorzugweise wird die chemisch-reduktive Metallabscheidung batch-weise durchgeführt, wobei die im Elektrolyten enthaltene Metallmenge vollständig auf den Partikelkernen abgeschieden wird. Die Überprüfung der vollständigen Ausarbeitung des Elektrolyten kann mit klassischen Analyseverfahren, wie der AAS oder ICP, erfolgen, was nicht nur für die Qualitätskontrolle, sondern insbesondere bei der Verwendung von Edelmetallen als antimikrobielle Schichtwerkstoffe unerlässlich ist. Um die gleichmäßige und vollständige Abscheidung der Metalle auf den Partikelkernen zu erreichen, ist die dosierte Zugabe der Metallverbindungen, Reduktoren sowie weiterer chemischer Zusätze in den Reaktor bei gleichzeitiger hoher Elektrolytbewegung, z. B. durch Rührer bzw. Mixer (Kneter bei Cellulose) durchzuführen. Temperierung bzw. Kühlung und klassische Elektrolytkontrollen wie Messung des pH-Wertes sind für die Qualitätssicherung der hybriden antimikrobiellen Partikel sowie die Prozesssicherheit von Bedeutung.

Die Nachbeschichtung des antimikrobiellen Hybridmaterials erfolgt in separaten Reaktoren, beispielsweise durch Zugabe unter gleichmäßigem Rühren zu einer wässrigen Lösung, die den Reaktanden enthält. Dabei findet an der Metalloberfläche des hybriden Systems beispielsweise durch Verwendung von Halogenid- oder Sulphid-haltigen wasserlöslichen Verbindungen, Ascorbinsäure, Chitosan, Polyethylenglykol, Polydopamin eine chemische Umsetzung oder Chemisorption an der Oberfläche der Metalle auf dem erfindungsgemäßen Hybridmaterial statt.

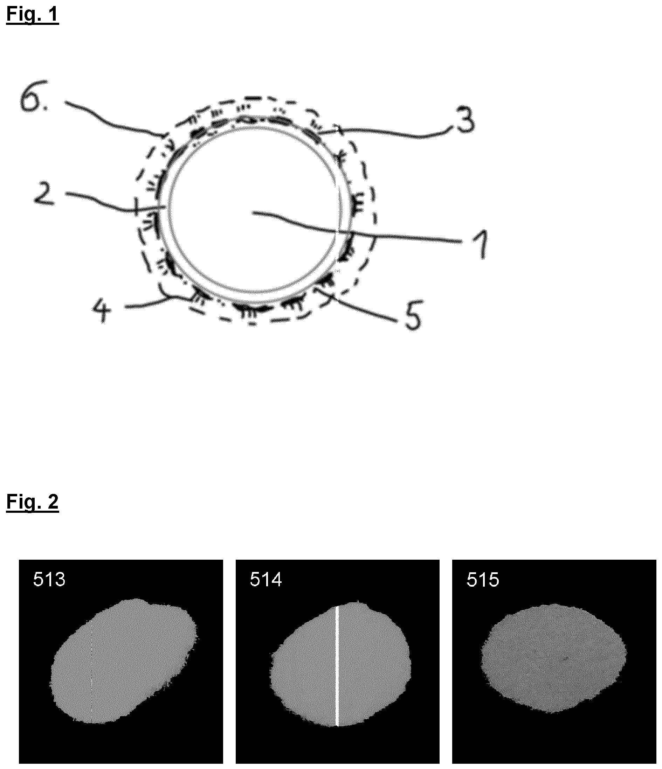

**Figur 1** zeigt schematisch den Aufbau des partikulären antimikrobiellen Hybridmaterials, dessen Form und Größe maßgeblich vom Partikelkern (1) bestimmt wird. Die Partikelgröße liegt i. d. R. bei < 50 µm, vorzugsweise < 5 µm. Bei faserförmigen Partikeln kann die Längenausdehnung, je nach Anwendung, bei < 1mm, vorzugweise < 60 µm, vorzugsweise, < 1 µm betragen.

Auf dem Kern (1) ist eine erste, weitgehend geschlossene Metallschicht (2), vorzugsweise eine Silberschicht, aufgetragen.

Über der ersten Schicht (2) des hybriden Systems ist das zweite Metall, vorzugsweise Ruthenium, als sehr dünne, nanoporöse Schicht (3) aufgetragen. Erste (2) und zweite Schicht (3) über dem Kern (1) sind so aufgebaut, dass Sauerstoff aus der feuchten Umgebung, an dem kathodischen Teil des aufgebrachten Materials der Hybridoberfläche reduziert wird und Sauerstoffradikale gebildet werden.

Die metallischen Komponenten der ersten (2) und zweiten Schicht (3) können durch chemische Reaktionen an der Oberfläche jeweils in eine Metallverbindung (4), z.B. ein Metallhalogenid oder Metallsulfid, umgewandelt werden bzw. durch eine oxidierende Lösung eine Oxidschicht ausbilden bzw. eine bestehende Oxidschicht in eine Mischoxidschicht mit veränderten Wertigkeiten umwandeln. Das hybride Schichtsystem auf den Partikeln kann alternativ mit einer chemisorbierten Ascorbinsäureschicht (5) versehen werden.

Das Hybridsystem kann zusätzlich mit einer polymeren Schicht (6) aus Chitosan, Polyethylenglykol oder Polydopamin versehen werden, die die antimikrobielle Wirkung nicht inhibieren.

Je nach dem benötigten Eigenschaftsprofil, können die chemisch-reduktiv abgeschiedenen Metalle und chemisch aufgebrachten anorganischen oder organischen Schichten in ihrer lateralen Verteilung, Dicke und Struktur variabel eingestellt werden.

**Figur 2** zeigt verschiedene antimikrobielle Varianten des erfindungsgemäßen Hybridmaterials, die auf versilberten Glasperlen S3000S der Firma Potters Industries Inc. mit einem mittleren Durchmesser von ca. 40 *µm* präpariert wurden. Silber dient hierbei als Anodenmaterial, auf dem als katalytisch aktives Kathodenmaterial Ruthenium mit unterschiedlichen Schichtdicken abgeschieden wurde. Für die Ruthenium-Beschichtung wurden die Glaskugeln in alkalischer Lösung unter starkem Rühren dispergiert. Dann wurden Lösungen von Ruthenium(III)chlorid und Natriumborhydrid als Reduktionsmittel zugeführt. Es wurden Partikel mit unterschiedlichen Schichtdicken an Ruthenium präpariert. Die berechnete mittlere Schichtdicke an Ruthenium beträgt für Probe 513 etwa *0,4 nm,* für Probe 514 etwa 0,8 *nm* und für Probe 515 etwa 1,9 *nm.* Die Oberfläche der Proben wird mit zunehmender Schichtdicke an Ruthenium etwas dunkler. Die Probe 515 weist einen schwach bräunlichen Farbton auf.

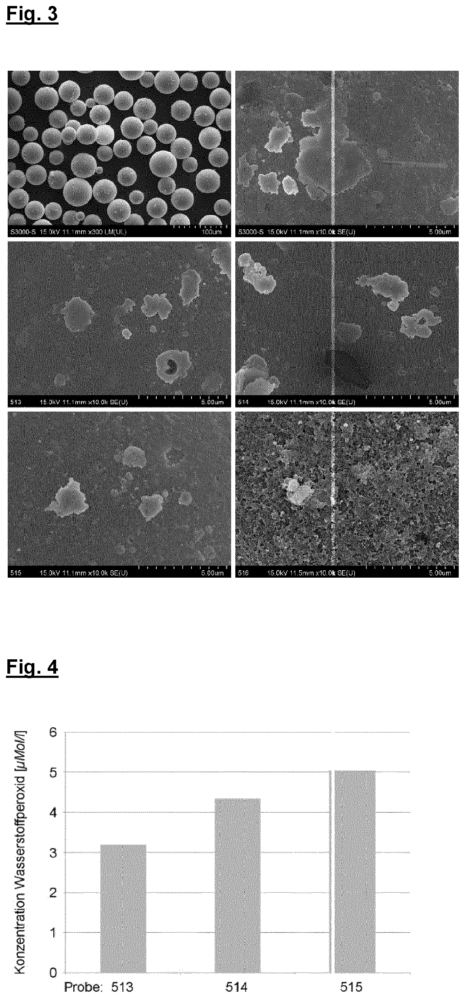

**Figur 3** zeigt REM Aufnahmen der chemisch-reduktiv beschichteten Partikel. Die versilberten Glaspartikel S3000S sind in 300-facher Vergrößerung (oben links) und in 10.000-facher Vergrößerung dargestellt (oben rechts) wiedergegeben. Weiterhin sind mit Ruthenium beschichtete Proben in 10.000-facher Vergrößerung abgebildet. Die Proben 513 (Mitte links), 514 (Mitte rechts) und 515 (unten links) weisen eine sehr gleichmäßige Beschichtung auf. Für die Probe 516 (unten rechts) mit einer mittleren Schichtdicke von etwa 9,4 *nm* ist die poröse Struktur der katalytisch aktiven Ruthenium-Beschichtung zu erkennen.

**Figur 4** zeigt die katalytische Bildung von Wasserstoffperoxid an der Oberfläche der partikulären antimikrobiellen Hybridmaterialien 513, 514 und 515. Es wurden jeweils 50 mg der Perlen in einer Lösung von Eisen(II)-Ionen und Xylenolorange für 1 *h* auf dem Schüttler bei 225 *U*/*min.* inkubiert. Durch die Bildung von Wasserstoffperoxid wurden die Eisen(II)-Ionen oxidiert. Die erzeugten Eisen(III)-Ionen bilden mit Xylenolorange unmittelbar einen farbigen Komplex, dessen Konzentration photometrisch bei einer Wellenlänge von 585 *nm* bestimmt wurde. Mit zunehmender Schichtdicke der Rutheniumschicht nimmt die Konzentration an gebildetem Wasserstoffperoxid zu.

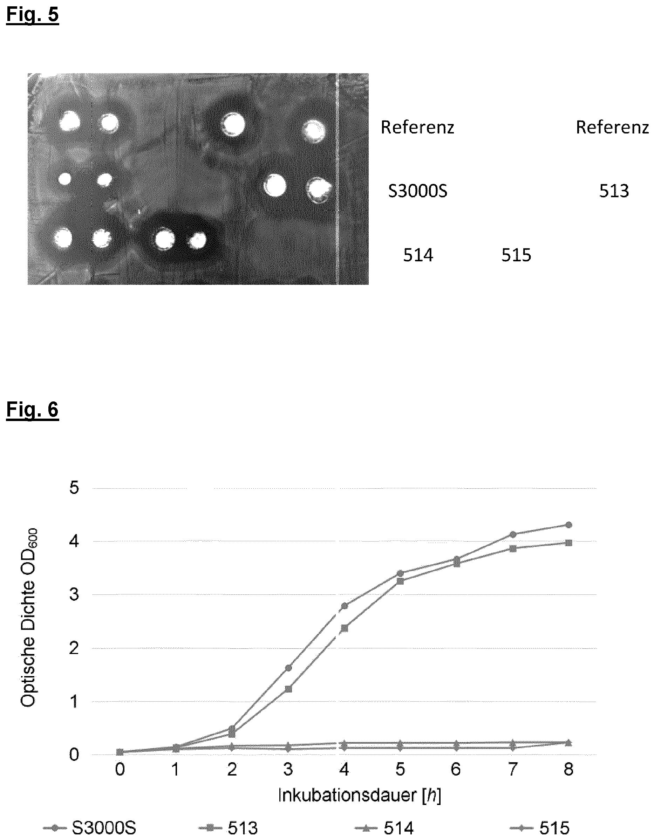

**Figur 5** zeigt die Bestimmung der antimikrobiellen Effizienz der Pulverproben nach dem Hemmhoftest. Es wurde eine Suspensionskultur mit 10⁷/*ml* Bakterien von E. *coli* (DSM 498) mit 50 *µl* ausplattiert. Die Proben wurden auf den Agar aufgebracht und für 18 *h* bei 37 °*C* inkubiert. Die versilberten Glaspartikel S3000S zeigen bereits eine mittlere antimikrobielle Aktivität. Die antimikrobielle Effizienz der Pulver 513, 514 und 515 ist sehr hoch. Ein Unterschied zwischen diesen Proben ist nach mikrobiologischem Agar-Test nicht erkennbar.

**Figur 6** zeigt Wachstumskurven der Pulver S3000S, 513, 514 und 515. Hierfür wurden in einem Erlenmeyerkolben 30 *ml* einer Kultur von MRSA (Quelle: Robert-Koch-Institut) auf die optische Dichte von 0,1 eingestellt. Anschließend wurden jeweils 200 *mg* der verschiedenen Proben im Schüttelinkubator bei 37 °*C* und 150 *U*/*min* inkubiert. In stündlichen Intervallen wurde dann die optische Dichte (OD₆₀₀) der Proben bestimmt. Für die versilberten Glasperlen wurde nach dieser sehr empfindlichen antimikrobiellen Untersuchungsmethode keine Hemmung des Wachstums der MRSA Kultur ermittelt. Mit zunehmender Schichtdicke an Ruthenium auf den Perlen nimmt die Wachstumshemmung deutlich zu. Für die Probe 515 ist für die gewählte Einwaage des Pulvers eine vollständige Wachstumshemmung zu beobachten. Die minimale Hemm-Konzentration (MHK) für dieses Pulver beträgt somit 200 *mg.*

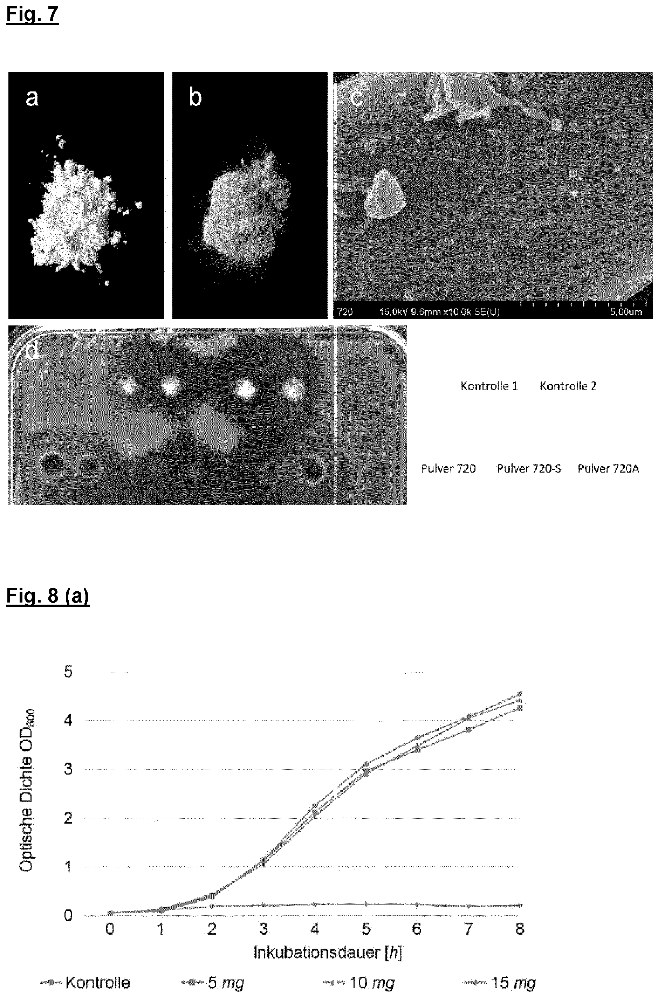

**Figur 7** zeigt ein antimikrobielles partikuläres Hybridmaterial, das auf Basis von Cellulose-Pulver mit einer mittleren Faserlänge von 60 *µm* präpariert wurde. Das Cellulose-Pulver wurde zunächst mit einer Lösung von Silbernitrat getränkt. Dann wurden die Silberionen durch Zugabe von Ascorbinsäure reduziert. Es entstand grauweißes, versilbertes Cellulose-Pulver. Das versilberte Cellulose-Pulver wurde anschließend in alkalischer Lösung unter starkem Rühren dispergiert. Dann wurden Lösungen von Ruthenium(III)chlorid und Natriumborhydrid als Reduktionsmittel zugesetzt. Es entstand dunkelgraues Pulver, dessen Farbe maßgeblich vom Gehalt an Ruthenium abhängt. **Figur 7a** zeigt das unbeschichtete Cellulose-Pulver und Figur **7b** zeigt das beschichtete, antimikrobielle Pulver mit einem Silbergehalt von 20 Gew.-% sowie einem Rutheniumgehalt von 1 Gew.-%. Die REM Aufnahme der Faseroberfläche in 10.000-facher Vergrößerung nach **Figur 7c** zeigt die gleichmäßige Verteilung der beiden Metalle auf der Cellulosefaser. Der Hemmhoftest nach **Figur 7d** zeigt, dass verschiedene Chargen des nach diesem Verfahren hergestellten Pulvers über eine hohe antimikrobielle Aktivität verfügen.

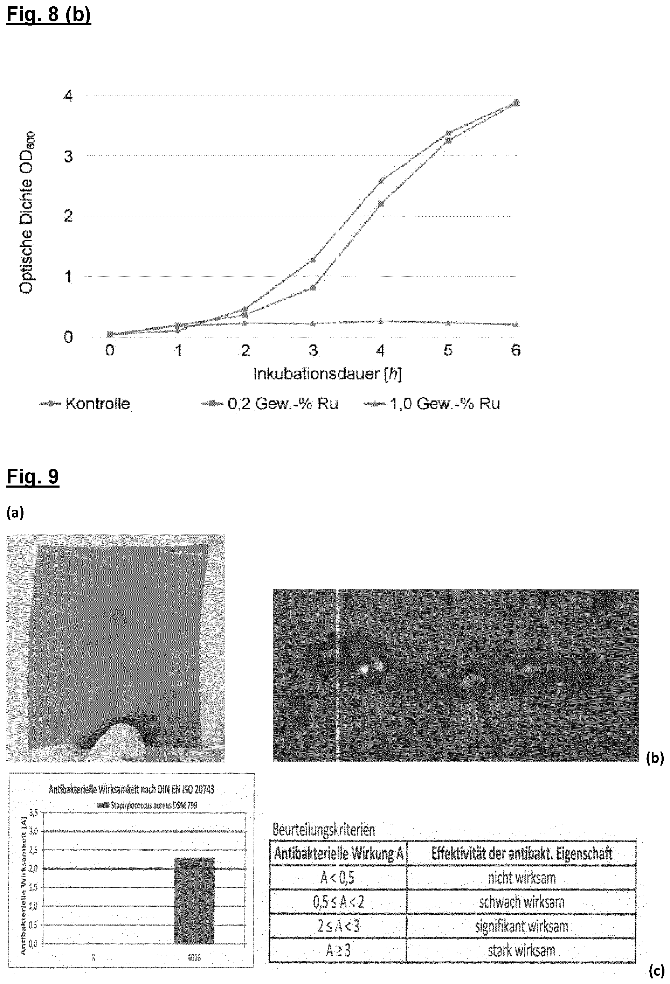

**Figur 8** **a** zeigt die Ermittlung der minimalen Hemm-Konzentration des antimikrobiellen Pulvers auf beschichteter Cellulose durch die Erstellung von MRSA-Wachstumskurven. Als Kontrolle diente eine Probe ohne Zusatz des antimikrobiellen Pulvers. Die minimale Hemm-Konzentration für das präparierte Pulver beträgt lediglich 15 *mg.* **Figur 8 b** zeigt, dass die antimikrobielle Effizienz der präparierten antimikrobiellen Partikel auf Cellulose-Basis ebenfalls von dessen Gehalt an Ruthenium abhängt. Für einen Ruthenium-Gehalt von 0,2 Gew-% ist nach der ermittelten Wachstumskurve lediglich eine leichte Inhibierung des Bakterienwachstums von MRSA zu erkennen, während für einen Ruthenium-Gehalt von 1,0 Gew.-% eine vollständige Inhibierung des Wachstums erfolgt. Als Kontrolle diente wiederum eine Probe ohne Zusatz des antimikrobiellen Pulvers. Die Einwaage der Pulver betrug jeweils 20 *mg.*

Obgleich alle hybriden Silber-Ruthenium-Partikel auf Cellulose-Trägermaterial eine antimikrobielle Wirkung zeigen, lässt sich die antimikrobielle Wirksamkeit anhand von Wachstumskurven mit MRSA-Keimen noch einmal hinsichtlich ihrer Stärke differenzieren. In **Tabelle 1** ist zu erkennen, dass sowohl die Rutheniumwie auch die Silber-Anteile (Mengen) Einfluss auf die Stärke der Wirksamkeit gegen MRSA nehmen. Über beide Metalle lässt sich die antimikrobielle Wirksamkeit des erfindungsgemäßen Hybridmaterials hinsichtlich der benötigten Stärke steuern. Tabelle 1 zeigt dabei analysierte Silber- und Ruthenium-Mengen [Gew. %] bezogen auf das gesamte Hybridmaterial, wobei die jeweilige antimikrobielle Stärke entsprechend der Legende mit (x+) bewertet wurde. Grundsätzlich ist festzustellen, dass letztlich alle Materialvarianten bei ausreichender Menge eine vollständige antimikrobielle Wirkung zeigen. Messtechnisch wurde daher die Partikelmenge solange reduziert, bis eine Differenzierung vorgenommen werden konnte, weil nicht alle Varianten eine vollkommene MRSA-Abtötung bewirken. Sofern bei geringerer Einwaage immer noch eine 100 %ige Wirkung einer Silber-Ruthenium-Variante feststellbar war, wurde diese als besonders wirksame Zusammensetzung eingeordnet. Somit wurde in Tabelle 1 entsprechend der Einwaagen die Bewertung für die angegebenen Varianten dargestellt.

**Tabelle 1**

| C-720 | Silber (Gew. %) | Ruthenium (Gew. %) | Antimikrobielle Wirksamkeit |
|---|---|---|---|
| 1.1 | 18,13 | 1,44 | +++++ |
| 2.2 | 10,93 | 1,01 | ++++ |
| 2.1 | 18,4 | 0,1 | +++ |
| 2.3 | 10,9 | 0,11 | ++ |

| | | | |
|---|---|---|---|
| +++++ = sehr stark; ++++ = stark; +++ = mittel; ++ = schwach | | | |

**Figur 9** **a** zeigt eine über den Lyocell-Prozess hergestellte antimikrobielle Cellulose-Folie, die durch Zugabe des erfindungsgemäß hergestellten antimikrobiellen Hybridmaterials auf Cellulose-Basis zum Lyocell-Prozess hergestellt worden ist. In gleicher Weise konnten nach dem Lyocell-Prozess auch antimikrobielle Cellulose-Fäden hergestellt werden. **Figur 9 b** zeigt die antimikrobielle Wirksamkeit des erfindungsgemäß hergestellten Cellulose-Fadens gegen *E*. *coli* (DSM 498) anhand des um den dünnen Faden herum ausgebildetem Hemmhofes. **Figur 9 c** zeigt die nach DIN EN ISO 20743 ermittelte signifikante antimikrobielle Wirkung gegen *S*. *aureus* (DSM 799) durch den Zusatz von lediglich 3 % des partikulären Cellulose-basierten Silber-Ruthenium-Hybrids (720b) zur Cellulose-Spinnlösung.

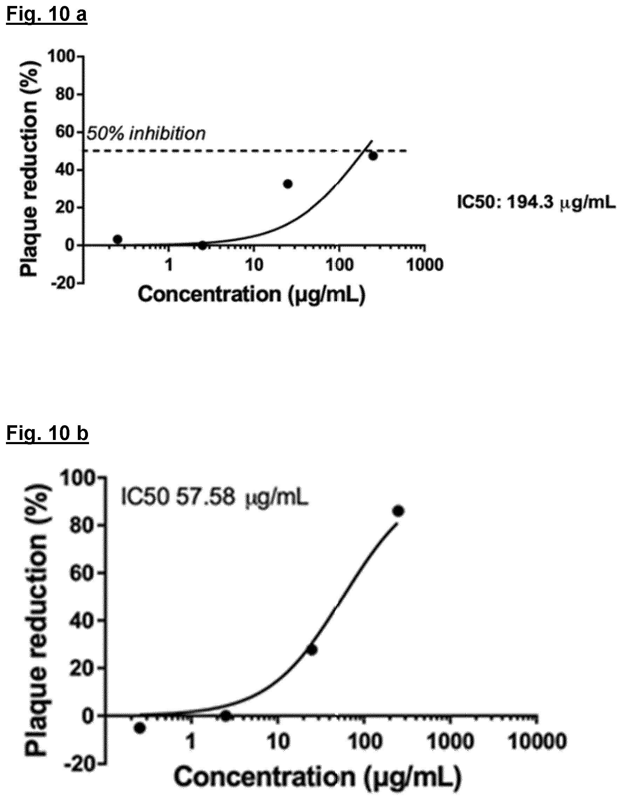

**Figur 10** zeigt die Wirksamkeit des erfindungsgemäß hergestellten partikulären antimikrobiellen Hybridmaterials gegen SARS-CoV-2 und den noch schwieriger zu inhibierenden Feline Coronavirus (FCoV). Die Tests wurden an der FU-Tier-Veterinärmedizin anhand des sogn. Plaque-Tests durchgeführt. Virus-Plaque-Tests bestimmen die Anzahl der Plaque-bildenden Einheiten (pfu) in einer Virusprobe, die ein Maß für die Virusmenge ist. Dieser Assay basiert auf einer mikrobiologischen Methode, die in Petrischalen oder Multiwell-Platten durchgeführt wird. Eine virale Plaque wird gebildet, wenn ein Virus eine Zelle innerhalb der fixierten Zell-Monolage infiziert. Die virusinfizierte Zelle lysiert und die Infektion wird auf benachbarte Zellen übertragen, wo sich der Infektion-Lyse-Zyklus wiederholt. Der infizierte Zellbereich bildet eine Plaque (ein Infektionsbereich, der von nicht infizierten Zellen umgeben ist), die mit einem Lichtmikroskop oder visuell sichtbar gemacht werden kann. Der Plaque-Reduktionsassay zeigt in **Figur 10 a,** dass die erfindungsgemäß hergestellten Cellulose basierten antimikrobiellen Partikel bereits ab einer Konzentration von ca. 0,2 mg/ml antiviral gegen den Feline Coronavirus wirken (IC50: 50% der Viren abtötet). Bei der in **Figur 10 b** wiedergegebenen antiviralen Wirkung des erfindungsgemäßen antimikrobiellen Cellulose-basiertem partikulären Hybridmaterials gegen SARS-CoV-2 liegt der IC50 bei ca. 0,05 mg/ml sogar noch deutlich niedriger. Damit eignet sich das erfindungsgemäße antimikrobielle Hybridsystems für die Bekämpfung von Viren durch Integration der Partikel in Farben, Lacke, Kunststoffe.

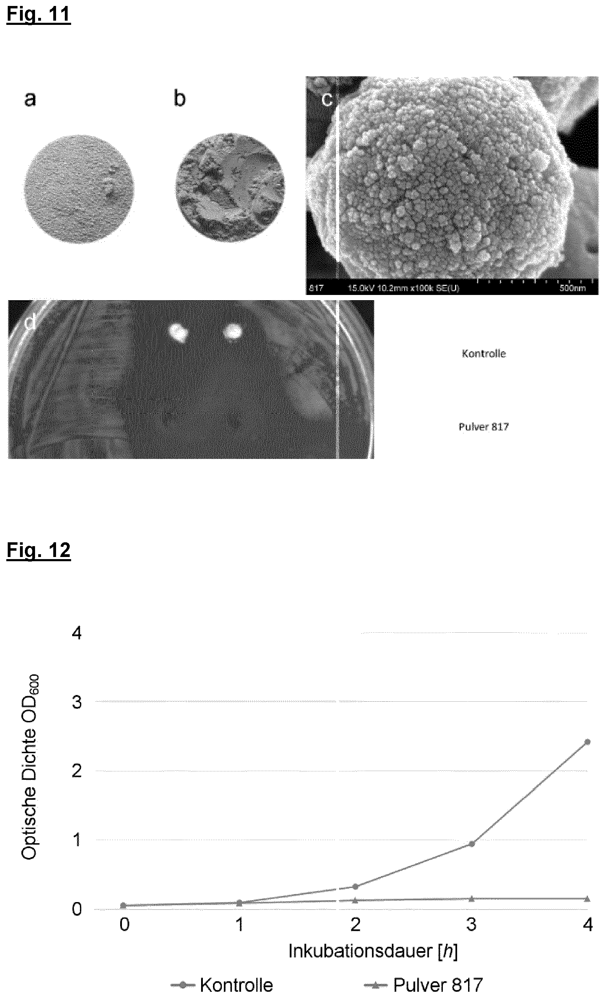

**Figur 11** zeigt Mikropartikel (antimikrobielles Pulver), die erfindungsgemäß auf Silberpartikeln hergestellt worden sind, wobei kommerziell erhältliches, sphärisches Silberpulver mit einer Partikelgröße von 1 *µm -* 100 *µm* mit Ruthenium beschichtet wurde. Das Silberpulver wurde in alkalischer Lösung unter starkem Rühren dispergiert. Dann wurden Lösungen von Ruthenium(III)chlorid und Natriumborhydrid als Reduktionsmittel zugesetzt. Es entstand dunkelgraues Pulver mit einem Rutheniumgehalt von 3,2 Gew.-%. **Figur 11** **a** zeigt das unbeschichtete Silberpulver und **Figur 11** **b** das beschichtete, antimikrobielle Pulver. **Figur 11** **c** zeigt die REM Aufnahme eines Pulverpartikels in 100.000-facher Vergrößerung mit einem Durchmesser von etwa 1 *µm.* Die poröse Struktur der Ruthenium-Beschichtung ist deutlich zu erkennen. In **Figur 11 d** ist der Hemmhoftest dargestellt, der eine hohe antimikrobielle Effizienz der erfindungsgemäßen Mikropartikel bzw. des Pulvers aufzeigt.

**Figur 12** zeigt die Wachstumskurve von MRSA für antimikrobielle Mikropartikel auf Basis von Silberpartikeln nach **Figur 11** **b.** Die minimale Hemm-Konzentration der Partikel beträgt 20 *mg.* Als Kontrolle diente eine Probe ohne Zusatz des antimikrobiellen Pulvers.

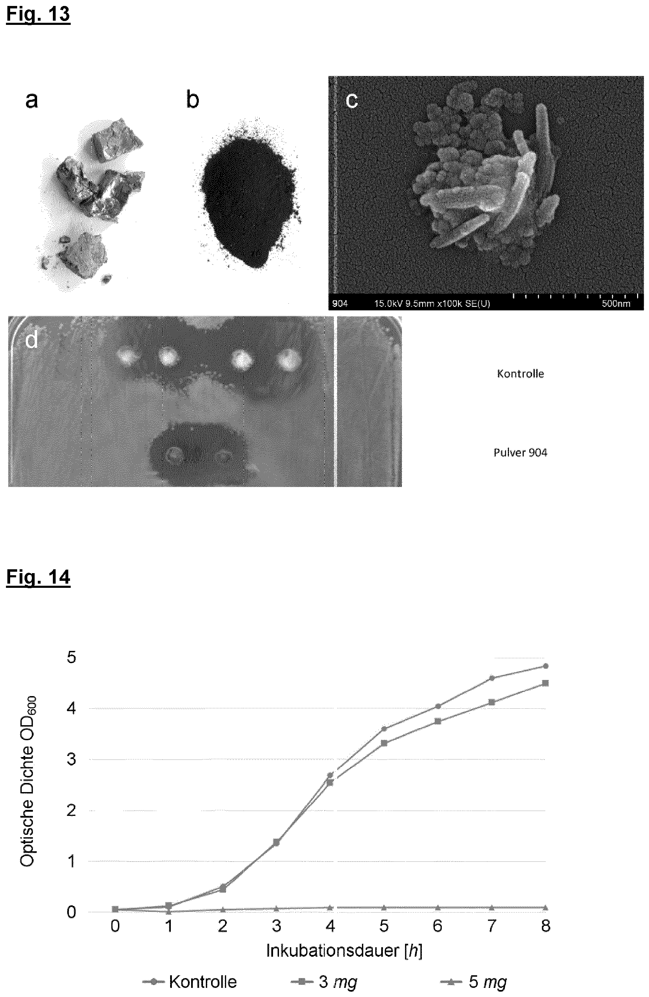

**Figur 13** zeigt erfindungsgemäße Mikropartikel (antimikrobielles Pulver) auf katalytischer Basis, wobei das als Grundlage verwendete Silberpulver zuvor durch einen chemisch-reduktiven Prozess hergestellt wurde. Als Reduktionsmittel wurde Ascorbinsäure verwendet. Zusätzlich wurde Gummi arabicum als Inhibitor eingesetzt. Das hergestellte Silberpulver wurde abfiltriert, gewaschen und direkt nach dem Abfiltrieren mit Ruthenium beschichtet. Hierbei wurden wiederum Lösungen von Ruthenium(III)chlorid und Natriumborhydrid als Reduktionsmittel zugesetzt. **Figur 13** **a** zeigt das Pulver nach dem Abfiltrieren, Waschen und Trocknen. Es bildeten sich größere, harte, goldfarbene Partikel. Diese wurden anschließend gemörsert. **Figur 13 b** zeigt das gemörserte, schwarze Pulver. Die Partikelgröße des Pulvers variiert von 0,1 *µm - 5 µm.* Der Rutheniumgehalt beträgt 3,2 Gew.-%. **Figur 13 c** zeigt die REM Aufnahme eines Pulverpartikels in 100.000-facher Vergrößerung. Der Durchmesser beträgt etwa *0,7 µm.*

**Figur 14** zeigt die Wachstumskurve der Mikropartikel bzw. des Pulvers nach Figur 13. Die minimale Hemm-Konzentration des Pulvers beträgt lediglich 5 *mg.* Dieser kleine Wert beruht auf der großen relativen Oberfläche der kleinen Pulverpartikel. Als Kontrolle diente eine Probe ohne Zusatz des antimikrobiellen Pulvers.

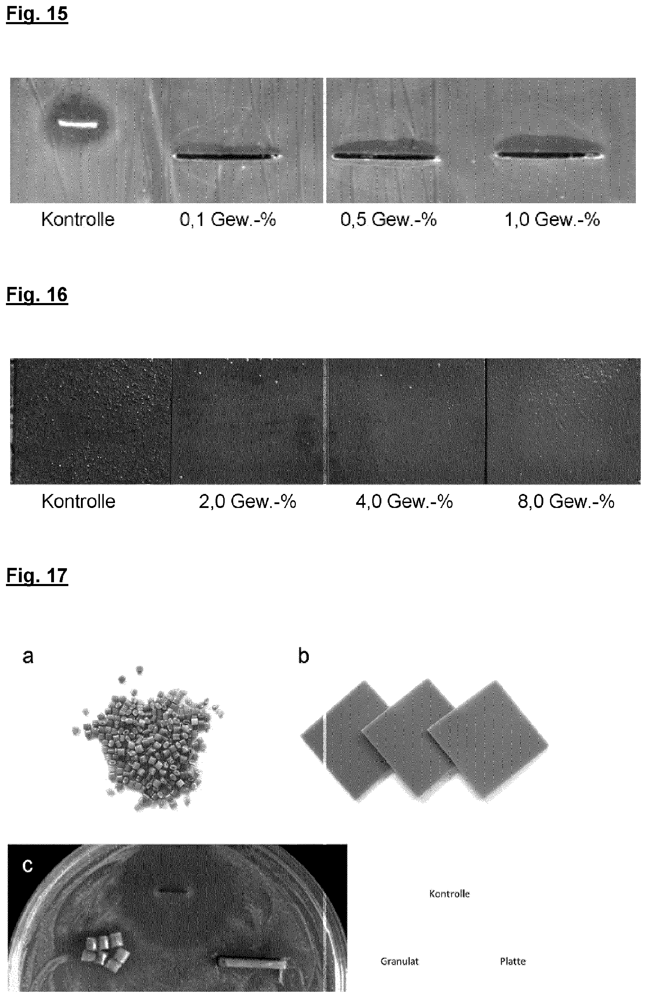

**Figur 15** zeigt mehrere Proben von kommerzieller Fassadenfarbe, die mit steigenden Konzentrationen eines erfindungsgemäß hergestellten antimikrobiellen Hybridmaterials versetzt wurden, das auf Glaspartikeln präpariert wurde. Die Konzentration des Pulvers beträgt 0,1 Gew.-%, 0,5 Gew.-% und 1,0 Gew.-%. Es wurde die antimikrobielle Aktivität der Proben gegen *E*. *Coli* Bakterien nach dem Hemmhoftest bestimmt. Alle Proben zeigen eine deutliche antimikrobielle Effizienz, die mit zunehmender Konzentration des Pulvers ansteigt. Die antimikrobielle Funktion des Hybridmaterials wird durch die Fassadenfarbe nicht inhibiert. Für die Filmkonservierung von Fassadenfarbe ist keine ausgeprägte Fernwirkung erforderlich, so dass für diese Anwendung deutlich geringere Konzentrationen des Hybridmaterial-Pulvers ausreichend sind. Als Kontrolle diente eine Vergleichsprobe mit hoher antimikrobieller Aktivität.

**Figur 16** zeigt mehrere Proben eines kommerziellen Antifouling-Anstrichs, die mit steigenden Konzentrationen an antimikrobiellem Hybridmaterial-Pulver versetzt wurden, das auf Cellulose-Pulver präpariert wurde. Die Konzentrationen des Pulvers betragen 2,0 Gew.-%, 4,0 Gew.-% und 8,0 Gew.-%. Als Kontrolle diente der Antifouling-Anstrich ohne Zusatz des antimikrobiellen Pulvers. Die Proben wurden für 6 Wochen in der Nordsee ausgelagert. Nach dieser Zeit zeigt die Kontrollprobe bereits einen deutlichen Bewuchs, während die Probe mit 2,0 Gew.-% an antimikrobiellem Pulver nur an vereinzelten Stellen einen Bewuchs aufweist. Mit steigender Konzentration an antimikrobiellem Hybridmaterial-Pulver nimmt der geringe Bewuchs weiter ab.

**Figur 17** zeigt Proben aus Ultramid C33, die 1 Gew.-% antimikrobielle Mikropartikel enthalten, das mit kommerziellem Silberpulver präpariert wurde. **Figur 17** **a** zeigt Granulat, und in **Figur 17 b** sind Platten dargestellt. **Figur 17** **c** zeigt den Hemmhoftest der Proben gegen *E*. *Coli* Bakterien. Beide Proben verfügen über eine mittlere antimikrobielle Aktivität. Eine Probe der Platte wurde für 18 Monate in VE Wasser inkubiert, das in regelmäßigen Abständen ausgewechselt wurde. Die antimikrobielle Aktivität der Probe ist nach der Inkubation unverändert, da deren antimikrobielle Aktivität nicht auf das Auslaugen eines Biozids hervorgerufen wird, sondern auf einem katalytischen Prozess beruht.

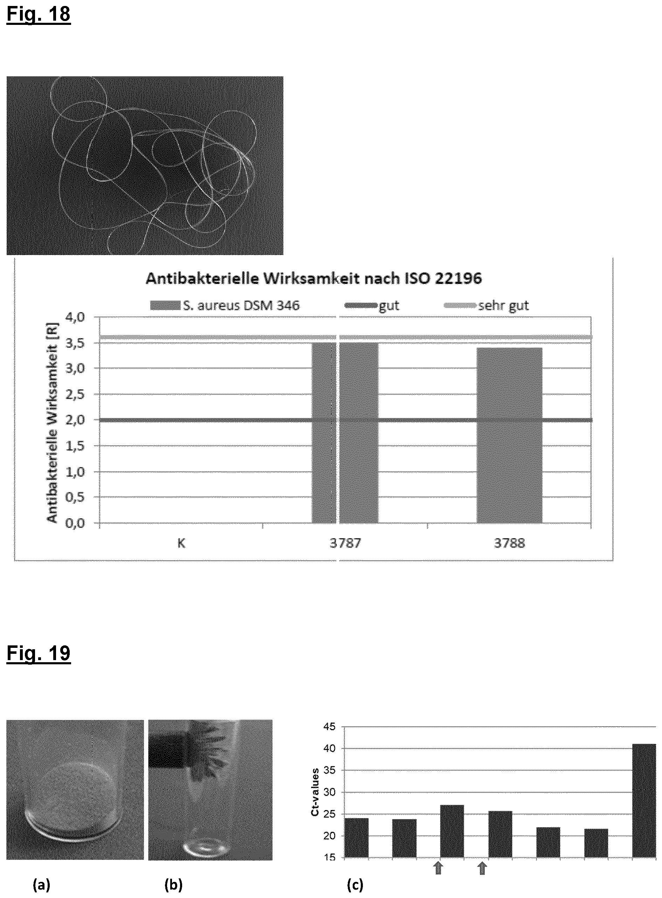

**Figur 18** zeigt Fasern aus Polyamid, die 3 Gew.-% antimikrobielle Mikropartikel auf katalytischer Basis enthalten **(****Figur 18** **a**). Das verwendete Mikropartikel-Pulver wurde durch Reduktion von Silberionen in einem chemisch-reduktiven Prozess und anschließender Beschichtung mit Ruthenium hergestellt. Damit das Pulver in die Fasern eingearbeitet werden kann, muss die Größe der Partikel < 5 *µm* betragen. Die Fasern verfügen über eine gute antimikrobielle Aktivität **(Figur 18 b).**

**Figur 19** **a** zeigt ein erfindungsgemäß hergestelltes antimikrobielles Hybridmaterial, dessen Kern aus ferromagnetischem Eisenpulver hergestellt worden ist. In **Figur 19 b** ist zu sehen, wie die mit einem ferromagnetischen Kern ausgestattete hybriden Partikel durch eine Glaswand mit einem starken Permanentmagneten vollständig in dem Glasbehälter von außen manipulierbar ist. Ein solches Hybridsystem kann beispielsweise in biologischen Messapparaturen eingesetzt werden. In **Figur 19 c** sind Ergebnisse des erfindungsgemäßen antimikrobiellen Hybridpartikelsystems (Pfeile) für PCR-Genomanalyse an gram-positiven *B*. *subtilis* Keimen zu sehen, wobei das erfindungsgemäße antimikrobielle Partikelsystem die Aufgabe hatte, *B. subtilis* (ca. 1x10exp6 Zellen) in einer 21µl Suspension mit PBS für 15 min bei RT zu lysieren. Hier konnten die Partikel nach Versuchende vollständig mit Hilfe eines Magneten aus dem Messgerät wieder entfernt werden.

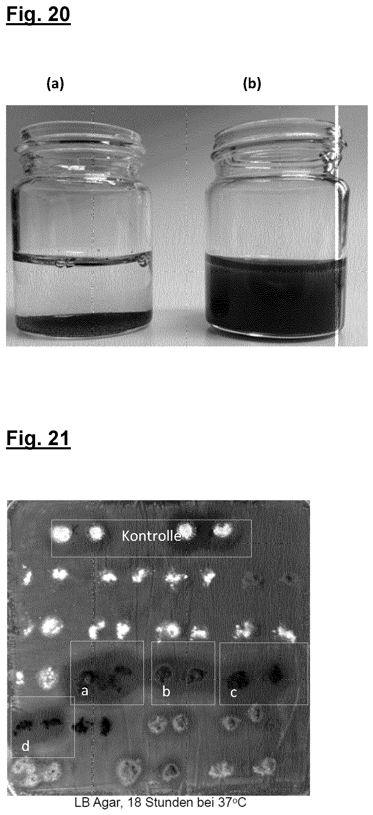

**Figur 20** zeigt ein erfindungsgemäß beschichtetes antimikrobielles Hybridmaterial, das durch starkes Rühren im Wasser gleichmäßig verteil ist. Die Partikel des Hybridmaterials in (a) sind ohne Nachbeschichtung, die Partikel des Hybridmaterials in (b) nachträglich in einer Dopamin-Hydrochloridlösung (2 mg/ml) und einem Phosphatpuffer (0,1M, pH 8,5) bei RT behandelt. Durch die Dopamin-Hydrochlorid-Behandlung wurde die Partikeloberfläche von dem zuvor hydrophoben Zustand in einen hydrophilen überführt. Das führte dazu, dass die ohne Nachbeschichtung mit Dopamin-Hydrochlorid hydrophoben Partikel nach dem Rühren sofort auf den Boden des Gefäßes sinken, während durch die hydrophilierten Partikel über längere Zeit eine stabile Dispersion aufrechterhalten werden kann **(****Figur 20 b)**.

**Figur 21** zeigt ein erfindungsgemäß hergestelltes antimikrobielles Hybridmaterial auf Cellulose-Basis, dessen antimikrobielle Wirksamkeit durch eine Nachbehandlung nicht in der mikrobiellen Wirksamkeit beeinträchtigt wird. **Figur 21** **a** zeigt anhand des ausgeprägten Hemmhofes auf dem Agar die antimikrobielle Wirkung der erfindungsgemäß hergestellten hybriden Partikel auf Cellulose-Basis ohne Nachbehandlung gegen eine *E*. *coli* (DSM 498) Suspensionskultur (10exp7/ml mit 200 µl ausplattiert). In **Figur 21 b** zeigt der gleichgroße Hemmhof, dass die mit Ascorbinsäure nachbehandelten Cellulose basierten hybriden Partikel die antimikrobielle Wirkung der erfindungsgemäß hergestellten Partikel nicht negativ verändern. Gleiches gilt für die Nachbehandlungen mit Chitosan **(Figur 21 c)** und Polydopamin **(Figur 21 d).**

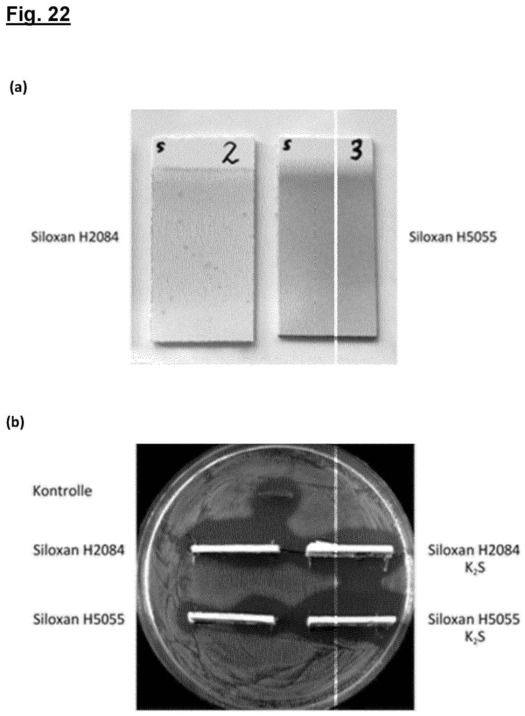

**Figur 22** zeigt ein Cellulose-basiertes antimikrobielles Hybridmaterial, das in Sol-Gel-Beschichtungswerkstoffe (z. B. Siloxane) integriert wurde und die Sol-Gel-Beschichtung mit antimikrobieller Wirksamkeit ausrüstet. Als Sol-Gel Beschichtungen wurden die beiden Siloxan-Coatings H 2084 und H 5055 **(****Figur 22 a)** verwendet. Als antimikrobieller Zusatz wurden hybride Cellulose basierten Partikel verwendet, die in einer Konzentration von 5 Gew.-% dem Siloxan-Coating beigemengt wurden. Nach dem Durchmischen wurde die Dispersion durch Sprühen auf den Probenträger aufgebracht. Anschließend erfolgte im Trockenschrank die Vernetzung der Beschichtung bei der entsprechenden Temperatur. Die Pulverpartikel zeigten hierbei eine gute Verteilung an der Probenoberfläche. In **Figur 22 b** sind antimikrobielle Untersuchungsergebnisse für *E*. *coli* auf dem Agar von einseitig Siloxan-beschichteten Polypropylen-Plättchen zu sehen, die mit 5 Gew.-% des erfindungsgemäßen Cellulose-basierten hybriden antimikrobiellen Hybridmaterials versehen waren. Der Hemmhofversuch mit *E*. *coli* (DSM 498) zeigt die hohe antimikrobielle Aktivität der beiden Proben. Dies gilt auch für Proben, die nachträglich für 5 min. in einer 1 %-igen Lösung von Kaliumsulfid inkubiert worden waren. Der teilweise unregelmäßige Hemmhof ist auf den ungleichmäßigen Sprühauftrag zurückzuführen. Es zeigt sich, dass die antimikrobielle Aktivität der erfindungsgemäß erzeugten antimikrobiellen Partikel von dem Siloxan-Coating kaum beeinträchtigt wird. Die nachträgliche Sulphid-Nachbehandlung führt in diesem Fall sogar zu einer Steigerung der antimikrobiellen Wirksamkeit des Dispersions-Coating-Systems. Da Siloxan-Schichten im auspolymerisierten Zustand hart und kratzfest sind, eignet sich dieses antimikrobielle Dispersions-Coating-System besonders für Oberflächen, die verschleißmäßig belastet werden.

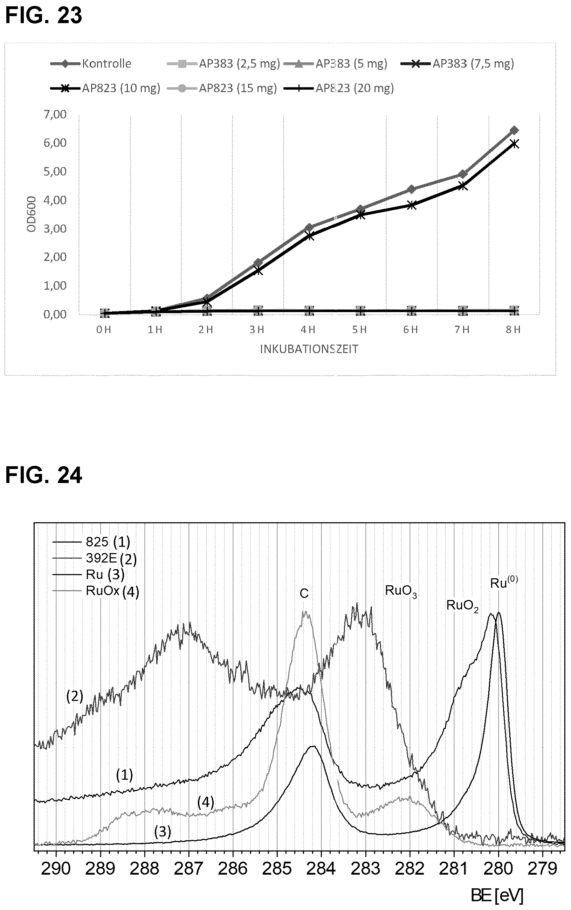

**Figur 23** zeigt die Wachstumskurven von MRSA-Bakterien, bei denen die beiden Ruthenium-/Ruthenium//Silber/Silber-Oxid-Oxid-Pulver mit verschiedenen Pulvermengen eingesetzt worden sind. Ruthenium kann mit unterschiedlichen starken Reduktionsmitteln (z. B. NaBH₄, N₂H₄) auf direktem, einstufigen Weg chemisch-reduktiv, beispielweise auf Silberoberflächen, abgeschieden und entsprechend Ruthenium/Ruthenium-Oxide auf der Silberoberfläche aufgetragen werden. Ruthenium/Ruthenium-Oxide können aber auch in einem zweistufigen Verfahren abgeschieden werden, wobei im ersten Schritt zunächst eine Aufoxidation von Ruthenium erfolgt und erst im zweiten Schritt die Reduktion des aufoxidierten Rutheniums zu Ruthenium und Ruthenium-Oxiden durchgeführt wird. Es war zu erwarten, dass die unterschiedlichen Verfahrenswege zur Ruthenium/Ruthenium-Oxid-Abscheidung auf Silberpartikeln zu einer vergleichbaren antimikrobiellen Wirksamkeit führen. Überraschender Weise wurde jedoch beim zweistufigen Verfahren eine um fast eine Größenordnung stärkere antimikrobielle Wirkung des Silber/Silber-Oxid//Ruthenium/Ruthenium-Oxid gegen S. aureus (MRSA) und P. aeruginosa im Vergleich zum direkten, einstufigen Ruthenium-Abscheideprozess festgestellt. Anders als bei der direkten, einstufigen Reduktion der Ru(III)-Ionen durch ein starkes Reduktionsmittel, beruht das indirekte, zweistufige Verfahren auf der Oxidation von Ru(III)-Ionen zu Ruthenium(VIII)-oxid [Chen 2011]. RuO₄ ist ein starkes Oxidationsmittel, das durch geeignete Reduktionsmittel in Ruthenium(IV)-oxid überführt wird, wobei das Substrat mit einer Schicht an Ruthenium(IV)-oxid überzogen wird. Die Oxidation von Ru(III)-Ionen zum RuO₄ erfolgt durch Natriumhypochloridt. Zur Stabilisierung von RuO₄ wird der Prozess in alkalischem Medium durchgeführt. Die Reduktion zum RuO₂ erfolgt durch Natriumnitrit.

### Präparation halbleitender Silber/Silber-Oxid//Ruthenium/Ruthenium-Oxid-Pulver durch chemisch-reduktive Abscheidung von Ru/RuOₓ auf Silberpartikeln nach einem indirekten, zweistufigen Verfahren zur Ruthenium-Abscheidung (AP 383):

Es wurden 50 g Silberpulver (Toyo Chemical Industrial, SBA10M27) in einem 2000 ml Dreihalskolben im Ultraschallbad mit 1000 ml deionisiertem Wasser aufgeschlämmt. Eine zusätzliche Rührung erfolgte mit dem KPG-Rührer bei 300 U/min. Nach 2 h wurde die braune Suspension durch Abdekantieren in einen weiteren 2000 ml Dreihalskolben überführt. Im Ultraschallbad und unter Rührung mit dem KPG-Rührer wurden 10 ml Ru(NO)(NO₃)₃-Lösung (10,83 g/l) zugesetzt. Dann wurde der Suspension eine Mischung folgender Lösungen hinzugesetzt:
300 ml NaClO-Lösung (14 %),
100 ml NaOH-Lösung (10 g/l),
87,5 ml NaNO2-Lösung (10 g/l).

Das Silberpulver färbte sich umgehend dunkel. Die Suspension wurde anschließend noch für 1 h im Ultraschallbad gerührt. Nach dem Sedimentieren des beschichteten Pulvers wurde der gelbe Überstand abdekantiert. Das Pulver wurde mit deionisiertem Wasser aufgenommen und abfiltriert. Nach dem Waschen mit deionisiertem Wasser wurde das Pulver mit Ethanol aufgenommen, abfiltriert und im Trockenschrank bei einer Temperatur von 60 °C getrocknet.

### Antimikrobielle Wirkung:

Überraschenderweise zeigen Silber/Silber-Oxid//Ruthenium/Ruthenium-Oxid-Pulver, bei denen das Ruthenium-Oxid im einstufigen bzw. zweistufigem Verfahren chemisch-reduktiv abgeschieden wurden, bei der antimikrobiellen Prüfung gegen MRSA-Bakterien (grampositiv) auffallend große Unterschiede. Silber/Silber-Oxid//Ruthenium/Ruthenium-Oxid-Pulver (AP823), die durch direkte Ruthenium-Reduktion auf Silberpartikeln mit dem starken Reduktionsmittel Natriumborhydrid (NaBH4) abgeschieden wurden, wiesen eine um nahezu eine Größenordnung geringere antimikrobielle Wirkung im Vergleich zu Silber/Silber-Oxid//Ruthenium/Ruthenium-Oxid-Pulvern (AP383) nach dem zweistufigen Verfahren auf. **Figur 23** zeigt die Wachstumskurven von MRSA-Bakterien, bei denen die beiden Ruthenium-/Ruthenium-Oxid//Silber/Silber-Oxid-Pulver mit verschiedenen Pulvermengen eingesetzt worden sind. Wie aus dem Verlauf der Wachstumskurven hervorgeht, zeigt das zweistufig hergestellte Silber/Silber-Oxid//Ruthenium/Ruthenium-Oxid-Pulver (AP383) bereits bei einer Einwaage von 2,5 mg Pulvermenge eine vollständige Abtötung der MRSA-Bakterien, wohingegen beim einstufig hergestellten Silber/SilberOxid//Ruthenium-/Ruthenium-Oxid-Pulver (AP823) die vollständige Abtötung erst bei 15 mg Pulvermenge erreicht wurde. Es zeigte sich also, dass bei der 2-stufigen Ruthenium-Abscheidung die antimikrobielle Wirksamkeit deutlich gegenüber dem 1-stufigen Verfahren erhöht ist, was daran zu erkennen ist, dass für eine vollständige Keimabtötung über die gesamte Versuchszeit von 8 h bei der Probe 383(vegleichbare Ru-Abscheidemethode wie 392) nur 2,5 mg Pulver und bei der Probe 823 > 10 mg benötigt werden, also um ca. das 4-6-fache weniger. Ein vergleichbar großer Unterschied in der antimikrobiellen Wirkung (ca. eine Größenordnung) wurde bei Untersuchungen der antimikrobiellen Wirkung beider Pulverarten (AP823) und (AP383) gegen P. aeruginosa PA 14 (gramnegativ) festgestellt.

Die antimikrobielle Wirkung ist besonders hoch bei Proben, die im ersten Halbelement Ruthenium (VI)-Oxid enthalten **(Tabelle 2).** Offensichtlich kann das Ruthenium(VI)-Oxid sowohl bei einer elektrochemischen wie bei der PVD-Abscheidung von Ruthenium erzielt werden, wenn bei der Ruthenium-Abscheidung ein Prozessschritt mit starker oxidativer Wirkung vorliegt (392 und RuOx). Die XPS-Oberflächenanalysen weisen auf eine Korrelation zwischen der antimikrobiellen Wirkung und der Zusammensetzung der Ruthenium-Oxide hin, wobei es möglicherweise auf ein bestimmtes Verhältnis von Ruthenium (VI) Oxid/Ruthenium (IV) Oxid ankommt. In jedem Fall ist das Vorhandensein von Ruthenium(VI)-Oxid für die erhöhte antimikrobielle Wirkung vorteilhaft oder gar notwendig.

**Tabelle 2: XPS-Analysenergebnisse - Herstellverfahren-Antimikrobielle Wirksamkeit**

| ProbenBezeichnung | Basismaterial | Ruthenium-Abscheideverfahren | Chemische Zusammensetzung (XPS- 3d Spektren) * | | | Antimikrobielle Wirksamkeit |
|---|---|---|---|---|---|---|
| | | | Ru(0) | RuO2 | RuO3 | |
| 825 | Silberpartikel | Chemisch-Reduktiv | 280, 1eV | 280,7 eV | | |
| | | Direktreduktion | ++++ | ++++ | n. d. | ++ |
| 392/383 | Silberpartikel | Chemisch-Reduktiv | Sehr geringer Anteil | Im breiten roten Peak RuO2 enthalten (hydratisiert). Substantieller Anteil ist RuO3 | 282,9 eV | |
| | | 2-stufig | | | | |
| | | Stufe 1: Oxidation | | | | |
| | | Stufe 2: Reduktion | | | | |
| | | | + | ++ | +++ | ++++ |
| "Ru" | PE-Folie | PVD-Sputtern | 280,0 eV | Geringer Anteil im Ru(0)-Peak | | |
| | | | ++++ | + | n. d. | ++ |
| "RuOx" | PE-Folie | PVD-Reaktives Sputtern (Oxidativ) | | | 282, 1 eV | |
| | | | | | ++++ | |
| | | | + | n.d. | | ++++ |

| | | | | | | |
|---|---|---|---|---|---|---|
| *) Referenzspektrum: Silber (Die Bindungsenergien der hoch aufgelösten Spektren wurden mit Hilfe der Ag3d_Spektren korrigiert | | | | | | |

Literatur-Bindungsenergien (eV):
- Ru (0): Ru 3d: 280, 2 eV; J. F. Moulder, W. F. Stickle, P. E. Sobol and K. D. Bomben: Handbook of X Ray Photoelectron Spectroscopy: A reference of Standard Spectra for identification and interpretation of XPS Data, J. Chastain and J. R. C. King, Editors, p. 115, Physical Electronics Eden Prairie, Minnesota (1995)
- RuO2: Ru 3d: 280, 66 eV; T. P. Luxton, M. J. Eick, K. G. Schekel; Journal of Colloid and Interface Science 359, (2011) 30-39
- RuO3: Ru 3d: 282, 5 eV; T. P. Luxton, M. J. Eick, K. G. Schekel ; Journal of Colloid and Interface Science 359, (2011) 30-39
   RuO3: Ru 3d: 282,4 eV; R. Kötz, H. J. Lewerenz and S. Stucki; J. Electrochem. Soc. 130, No. 4, 1983, 825-829.

Neben der nasschemischen 2-stufigen Ru-Abscheidung auf Silber wurden Ruthenium und Silber auch durch PVD-Beschichtung auf einer PE-Folie aufgebracht, was den Vorteil hat, dass auf den PVD-Proben kein Silberchlorid vorliegt und möglicherweise festgestellte Unterschiede zweifelsfreier auf das Ruthenium-Halbelement zurückgeführt werden können.
(A) PVD-Abscheidung:
   - **(a)** Ruthenium-Sputtern auf Silber (Probenbezeichnung "Ru")
   - **(b)** Reaktives Sputtern (O₂) von Silber und Ruthenium (Probenbezeichnung "RuOx")
(B) Chemisch-reduktive Ruthenium Abscheidung:
   - **(c)** direkte Reduktion zur Ruthenium-Abscheidung auf Silber (Probenbezeichnung "825")
   - **(d)** Reduktion von Ruthenium zur Abscheidung auf Silber in dem bereits beschriebenen 2-stufigen Verfahren (Oxidation + anschließende Reduktion, (Probenbezeichnung "392").

Diese 4 Proben wurden anhand von Wachstumskurven und der Oberflächenzusammensetzung (XPS-Analyse) untersucht. Als Ergebnis hat sich gezeigt, dass bei beiden Untersuchungen Unterschiede innerhalb der jeweiligen Gruppe (A) bzw. (B), aber auch zwischen den Gruppen (A) und (B) aufgetreten sind, wobei eine erhöhte antimikrobielle Effizienz mit einer auffälligen Unterscheidung in der Oberflächenzusammensetzung, entsprechend der XPS-Analyse, korrespondierte.

**Figur 24** zeigt XPS-Spektren der Proben Ru (a), RuOx (b) sowie 825 (c), 392 (d). Antimikrobielle Untersuchungen hatten wie oben beschrieben gezeigt, dass sich bei der chemisch-reduktiven Abscheidung und der PVD-Abscheidung von Ru/RuOx//Ag/AgCl bzw. AgOx-Halbelement-Kombinationen deutliche Unterschiede ergeben. Die XPS-Analysen zeigen in auffallender Weise Unterschiede, die mit den unterschiedlichen antimikrobiellen Wirksamkeiten korrespondieren. Wie in den Ru3d-Spektren (Figur 24) zu sehen, gibt es sowohl bei der Gruppe chemisch-reduktiv hergestellter Proben **825 (c)** (Kurve **(1)), 392 (d)** (Kurve **(2)**) als auch der Gruppe der PVD-beschichteten Proben **Ru (a)** (Kurve **(3)), RuOx (b)** (Kurve **(4)**) innerhalb einer Gruppe als auch zwischen den beiden Gruppen folgende auffällige Unterschiede:
- Bei der **Probe 825** (a) Kurve 1 wird ein schmales Signal vom metallischen Ruthenium (BE = 280,1 eV) gefunden. Das Spektrum der **Probe Ru** besteht zum größten Teil (65 %) aus metallischem Ruthenium und ca. 24 % werden dem RuO2 zugeordnet.
- Die Probe **RuOx (b)** (Kurve **(4)** - PVD-oxidierend gesputtert) enthält deutlich weniger Ru(0), wodurch die Kohlenstoffanteile deutlicher hervortreten. Die größte Komponente (BE = 284,4 eV) wäre Metallcarbid zuzuordnen (C stammt offenbar aus PVD-Reinigung der PE-Folie). Der Rutheniumanteil am Spektrum wird von dem Signal bei BE = 282,1 eV bestimmt, das etwa 85 % ausmacht und RuO3** zugeordnet werden kann. Die Halbwertsbreite dieser Komponente ist recht groß, so dass ein Beitrag weiterer Verbindungen zu dem Signal nicht auszuschließen ist. Die übrigen Ru-Anteile des Spektrums werden von Oxidhydraten des Ru(VI) oder höheren Oxidationstufen des Rutheniums verursacht.
   Die Probe **392 (d)** Kurve **(2)** ähnelt der Probe **RuOx (b)** Kurve **4** und enthält ebenfalls RuO3** in deutlicher Konzentration. Darüber hinaus sind jedoch weitere Verbindungen vorhanden, bei denen es sich um Oxidhydrate handeln kann. Aber es sind auch Ru-Verbindungen mit größerer Wertigkeit möglich. Der Ru(0)- und RuO2-Anteil ist klein.
   ***) Nach Literaturangaben (Tabelle 1) wird zwischen 282,2 eV und 282,6 eV **RuO₃** verortet.*

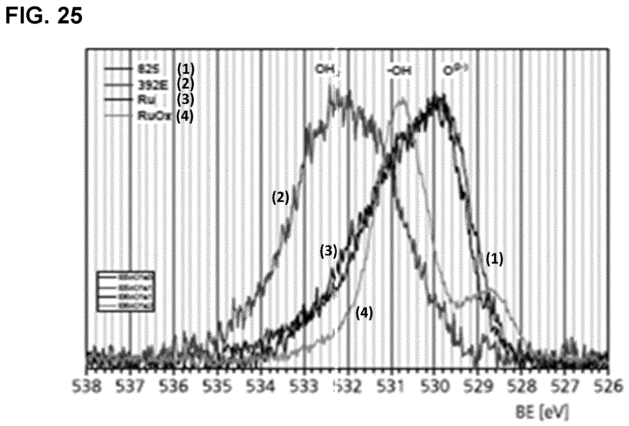

In den Sauerstoff-O1s-Spektren **(****Figur 25****)** sieht man eine Gruppierung der Proben, wie sie für die Ru3d-Spektren beschrieben wurden. Die Proben **Ru** und **825** ergeben praktisch identische Spektrenformen, die mit drei Komponenten angeglichen werden können. Bei BE = 530 eV werden Metalloxide erwartet. Die Komponenten bei größerer BE können Hydroxide und Hydrate repräsentieren. Allerdings sind aller Wahrscheinlichkeit nach wesentliche Anteile davon Adsorbaten zuzuordnen. Die Probe **RuOx** ist wohl wesentlich von den Adsorbaten beeinflusst. Daneben sind die O-Atome in den Rutheniumoxiden zu sehen. Die Probe **392** zeigt nur geringe Anteile an oxidischen Sauerstoffatomen. Der überwiegende Anteil ist in Hydraten gebunden. Dazwischen sind wohl noch Hydroxide zu finden.

Die **XPS-Analysen** zeigen mehrere Unterschiede in der oxydischen Zusammensetzung der untersuchten Proben. Auffallend, und möglicherweise für die erhöhte antimikrobielle Wirksamkeit ein Hauptverantwortlicher, könnte das Vorhandensein der sechswertigen Oxidationsstufe des Rutheniums, neben dem RuO₂ und dem metallischen Ru(0), in den Proben mit einer hohen antimikrobiellen Wirksamkeit sein. Insbesondere in den PVD-Proben, bei denen kein AgCl enthalten ist, kann von dieser Seite kein Einfluss auf eine Erhöhung der antimikrobiellen Wirksamkeit vorhanden sein.

## Patentansprüche

1. Hybridmaterial, das Partikel umfasst, die jeweils mindestens zwei unterschiedliche Metallverbindungen umfassen, wobei zumindest eine erste Metallverbindung und eine zweite Metallverbindung zumindest mit ihren jeweiligen Oberflächen miteinander in elektrisch leitendem Kontakt stehen, und wobei die erste Metallverbindung mindestens eine halbleitende Verbindung mindestens eines Übergangsmetallelements umfasst, das über mehrere Oxidationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen Halbelemente bilden, die in Gegenwart von Wasser und Sauerstoff kurzgeschlossen sind und dadurch eine antimikrobielle, antivirale und/oder fungizide Wirkung entfalten, **dadurch gekennzeichnet, dass** die Partikel jeweils mindestens ein Trägermaterial umfassen, auf das die beiden unterschiedlichen Metallverbindungen zumindest teilweise aufgebracht sind, wobei das Trägermaterial mindestens ein Material umfasst, das aus der Gruppe bestehend aus Glas, Zeolith, Silikat, Metall oder einer Metalllegierung, Metalloxid, Keramik, Graphit und einem Polymer ausgewählt ist, und wobei die Übergangsmetallverbindung der ersten Metallverbindung Ruthenium, das in einer oder beiden der Oxidationsstufen VI und IV vorliegt, umfasst.

2. Hybridmaterial nach Anspruch 1, **dadurch gekennzeichnet, dass** dieses mit organischen Polymeren, vorzugsweise Polyethylenglycol, Polydopamin und/oder Chitosan, und/oder mit Ascorbinsäure oder Ascorbinsäurederivaten modifiziert ist.

3. Hybridmaterial nach Anspruch 1 oder 2, **dadurch gekennzeichnet, dass** die Stärke der antimikrobiellen Wirkung durch ein Einstellen der Menge mindestens einer der beiden Metallverbindungen und/oder der Flächenanteile der beiden Metallverbindungen auf der Partikeloberfläche gezielt einstellbar ist.

4. Hybridmaterial nach einem der Ansprüche 1 bis 3, **dadurch gekennzeichnet, dass** die Übergangsmetallverbindung der ersten Metallverbindung mindestens ein Metalloxid, Metalloxyhydrat, Metallhydroxid, Metalloxyhydroxid, Metallhalogenid und/oder mindestens ein Metallsulfid des Übergangsmetallelements umfasst.

5. Hybridmaterial nach einem der Ansprüche 1 bis 4, **dadurch gekennzeichnet, dass** der Silberhalbleiter mindestens ein Silberoxid, Silberhydroxid, Silberhalogenid oder Silbersulfid, oder eine Kombination von Silber und einer entsprechenden Silberverbindung, umfasst.

6. Hybridmaterial nach einem der Ansprüche 1 bis 5, **dadurch gekennzeichnet, dass** die Partikel sphärisch oder polyedrisch ausgebildet sind und einen mittleren Durchmesser von höchstens 100 µm, vorzugsweise höchstens 50 µm, insbesondere höchstens 5 µm, aufweisen, und/oder dass die Partikel faserförmig ausgebildet sind und eine mittlere Länge von höchstens 1 mm, vorzugsweise höchstens 100 µm, insbesondere höchstens 75 µm oder höchstens 60 µm, aufweisen.

7. Verwendung des Hybridmaterials nach einem der Ansprüche 1 bis 6 als Additiv in Verbindung mit Materialien, Werkstoffen und/oder Beschichtungsmaterialien zur Erzeugung einer antimikrobiellen, antiviralen und/oder fungiziden Wirkung.

## Claims

1. A hybrid material comprising particles, each of which comprises at least two different metal compounds, wherein at least a first metal compound and a second metal compound are in electrically conductive contact with one another at least via their respective surfaces, and wherein the first metal compound comprises at least one semiconducting compound of at least one transition metal element which has multiple oxidation states and allows a change in oxidation states via catalytically active centres, and the second metal compound comprises at least one electrically conductive silver semiconductor, wherein the two metal compounds form half-cells which are short-circuited in the presence of water and oxygen and thereby exert an antimicrobial, antiviral and/or fungicidal effect, **characterised in that** the particles each comprise at least one carrier material onto which the two different metal compounds are at least partially applied, wherein the carrier material comprises at least one material selected from the group consisting of glass, zeolite, silicate, metal or a metal alloy, metal oxide, ceramic, graphite and a polymer, and wherein the transition metal compound of the first metal compound comprises ruthenium present in one or both of the oxidation states VI and IV.

2. A hybrid material according to claim 1, **characterised in that** it is modified with organic polymers, preferably polyethylene glycol, polydopamine and/or chitosan, and/or with ascorbic acid or ascorbic acid derivatives.

3. A hybrid material according to claim 1 or 2, **characterised in that** the strength of the antimicrobial effect can be specifically adjusted by varying the amount of at least one of the two metal compounds and/or the relative surface areas of the two metal compounds on the particle surface.

4. Hybrid material according to any one of claims 1 to 3, **characterised in that** the transition metal compound of the first metal compound comprises at least one metal oxide, metal oxyhydrate, metal hydroxide, metal oxyhydroxide, metal halide and/or at least one metal sulphide of the transition metal element.

5. A hybrid material according to any one of claims 1 to 4, **characterised in that** the silver semiconductor comprises at least one silver oxide, silver hydroxide, silver halide or silver sulphide, or a combination of silver and a corresponding silver compound.

6. A hybrid material according to any one of claims 1 to 5, **characterised in that** the particles are spherical or polyhedral in shape and have an average diameter of at most 100 µm, preferably at most 50 µm, in particular at most 5 µm, and/or that the particles are fibrous in shape and have an average length of at most 1 mm, preferably at most 100 µm, in particular at most 75 µm or at most 60 µm.

7. Use of the hybrid material according to any one of claims 1 to 6 as an additive in combination with materials, substances and/or coating materials for producing an antimicrobial, antiviral and/or fungicidal effect.

## Revendications

1. Matériau hybride comprenant des particules qui comprennent chacune au moins deux composés métalliques différents, au moins un premier composé métallique et un deuxième composé métallique étant en contact électriquement conducteur l'un avec l'autre au moins au niveau de leurs surfaces respectives, et dans lequel le premier composé métallique comprend au moins un composé semi-conducteur d'au moins un élément de transition présentant plusieurs états d'oxydation et permettant un changement d'états d'oxydation par l'intermédiaire de centres catalytiquement actifs, et le deuxième composé métallique comprend au moins un semi-conducteur à base d'argent électriquement conducteur, les deux composés métalliques formant des semi-cellules qui sont court-circuités en présence d'eau et d'oxygène et déploient ainsi un effet antimicrobien, antiviral et/ou fongicide, **caractérisées en ce que** les particules comprennent chacune au moins un matériau support sur lequel les deux composés métalliques différents sont au moins partiellement déposés, le matériau support comprenant au moins un matériau choisi parmi le groupe constitué du verre, de la zéolite, du silicate, d'un métal ou d'un alliage métallique, d'un oxyde métallique, de la céramique, graphite et un polymère, et le composé de métal de transition du premier composé métallique comprenant du ruthénium présent à l'un ou aux deux des états d'oxydation VI et IV.

2. Matériau hybride selon la revendication 1, **caractérisé en ce qu'**il est modifié avec des polymères organiques, de préférence du polyéthylène glycol, de la polydopamine et/ou du chitosane, et/ou avec de l'acide ascorbique ou des dérivés de l'acide ascorbique.

3. Matériau hybride selon la revendication 1 ou 2, **caractérisé en ce que** l'intensité de l'effet antimicrobien peut être ajustée de manière ciblée en modifiant la quantité d'au moins l'un des deux composés métalliques et/ou les proportions de surface d' s des deux composés métalliques à la surface des particules.

4. Matériau hybride selon l'une des revendications 1 à 3, **caractérisé en ce que** le composé de métal de transition du premier composé métallique comprend au moins un oxyde métallique, un oxyhydrate métallique, un hydroxyde métallique, un oxyhydroxyde métallique, un halogénure métallique et/ou au moins un sulfure métallique de l'élément de métal de transition.

5. Matériau hybride selon l'une des revendications 1 à 4, **caractérisé en ce que** le semi-conducteur à base d'argent comprend au moins un oxyde d'argent, un hydroxyde d'argent, un halogénure d'argent ou un sulfure d'argent, ou une combinaison d'argent et d'un composé d'argent correspondant.

6. Matériau hybride selon l'une des revendications 1 à 5, **caractérisé en ce que** les particules sont de forme sphérique ou polyédrique et présentent un diamètre moyen d'au plus 100 µm, de préférence d'au plus 50 µm, en particulier d'au plus 5 µm, et/ou **en ce que** les particules sont de forme fibreuse et présentent une longueur moyenne d'au plus 1 mm, de préférence d'au plus 100 µm, en particulier d'au plus 75 µm ou d'au plus 60 µm.

7. Utilisation du matériau hybride selon l'une des revendications 1 à 6 en tant qu'additif en association avec des matériaux, des matières et/ou des matériaux de revêtement pour produire un effet antimicrobien, antiviral et/ou fongicide.
